# EUROPÄISCHE PATENTSCHRIFT

(11) **EP 4 634 691 B1**
(45) Veröffentlichungstag und Bekanntmachung des Hinweises auf die Patenterteilung: **25.11.2026**
(21) Anmeldenummer: 23834008.7
(22) Anmeldetag: 14.12.2023
(51) Int. Cl.: G01S 7/4914, G01S 7/4915, G01S 7/4912, G01S 17/34, G01S 17/42

(54) **OPTISCHE MESSVORRICHTUNG UND VERFAHREN**
OPTICAL MEASURING DEVICE AND METHOD
DISPOSITIF ET PROCÉDÉ DE MESURE OPTIQUE

(30) Priorität: 16.12.2022 DE 102022133586
(43) Veröffentlichungstag der Anmeldung: 22.10.2025
(73) Patentinhaber: ams-OSRAM International GmbH, 93055 Regensberg (DE)
(72) Erfinder: WINDISCH, Reiner, 93186 Pettendorf (DE)
(74) Vertreter: impuls legal PartG mbB
(86) Internationale Anmeldenummer: PCT/EP2023/085946
(87) Internationale Veröffentlichungsnummer: WO 2024/126743

(56) Entgegenhaltungen:
- WO-A1-2021/252153
- WO-A1-2022/035537

## Beschreibung

Die vorliegende Erfindung betrifft eine optische Messvorrichtung und ein Verfahren, insbesondere zum Erfassen einer Entfernung eines Objektes.

### HINTERGRUND

Bei Entfernungsmessungen insbesondere im Kraftfahrzeugbereich kommen heutzutage neben Radarsystemen auch LIDAR-Systeme zum Einsatz. "LIDAR" steht für "Light Detektion and Ranging" und betrifft eine Methode, um mittels eines Lichtstrahls, insbesondere eines Laserstrahls die Entfernung und in einigen Anwendungen auch die Geschwindigkeit zu einem Objekt zu detektieren und zu erfassen.

WO 2022/035537 A1 sowie WO 2021/252153 A1 offenbaren bekannte LIDAR-Systeme.

Eine mögliche Herangehensweise besteht dabei darin, einen kontinuierlichen Laserstrahl auszusenden, dessen Lichtfrequenz periodisch moduliert wird. Dieser Ansatz wird als FMCW-LiDAR bezeichnet, da der Laser kontinuierlich in seiner Frequenz verändert wird. Konkret steigt bei FMCW-LiDAR die Frequenz über einen bestimmten Zeitraum an und fällt anschließend wieder ab, wobei der Anstieg und/oder der Abfall als Rampe, Durchlauf oder Chirp bezeichnet wird. Durch das Erfassen eines von einem Objekt reflektierten Anteils des abgestrahlten Laserlichts während eines solchen Chirps kann die Entfernung und auch die relative Geschwindigkeit mittels des optischen Dopplereffektes erfasst werden.

Dabei macht man sich das sogenannte Schwebungssignal zunutze, dass entsteht, wenn ein Teil des abgestrahlten Lichts mit einem von einem Objekt reflektierten Licht überlagert wird. Da das reflektierte Licht aufgrund der Rampe eine andere Frequenz hat als der Teil des abgestrahlten Lichts, entsteht hieraus eine Schwebung. Mit dessen Frequenz kann dann wiederum auf die Entfernung zu dem Objekt zurückgeschlossen werden.

Verschiedene Situationen verlangen es jedoch dabei, mehrere Messungen eventuell auch mit unterschiedlichen Parametern aufzunehmen, um mögliche Situationen auseinanderhalten zu können. Beispielsweise erlaubt eine einzelne Messung mit einem kontinuierlichen, sich in seiner Frequenz ändernden Lichts nicht ein zu bewegendes Objekt mit seiner Relativgeschwindigkeit zu erfassen. Hierzu wäre eine zweite Messung mit einer anderen Frequenz oder einer unterschiedlichen Steigung notwendig. Die unterschiedlichen Situationen erfordern somit mehrere Messungen, sodass eine Vielzahl von Messungen zur Erzeugung eines dreidimensionalen Bildes mit hoher Auflösung eine lange Zeit benötigt.

Neben den grundsätzlichen physikalischen Problemen gibt es jedoch auch messtechnische Herausforderungen. So bedingt eine Entfernungsmessung mittels FMCW-Lidar ein Schwebungssignal mit einer typischen Frequenz im Bereich von 10 bis 200 MHz, welches abgetastet und verarbeitet werden muss. Dies erfordert eine Abtastrate im Bereich von mehreren hundert MHz, um das Abtasttheorem zu erfüllen, wobei Abtastraten im GHz in der Praxis erforderlich werden.

Die erforderlichen entsprechend schnellen Verstärkter und auflösenden AD-Wandler haben einen Mindestplatzbedarf. Sollen derartige Detektoren in einem zweidimensionalen Array ähnlich einer Kamera zwecks paralleler Messung eines zweidimensionalen Gesichtsfeldes angeordnet werden, so ist es technisch kaum möglich, die erforderlichen Bauelemente direkt im Bereich des Detektorarrays zu platzieren. Eine externe Platzierung ist ebenfalls praktisch unmöglich, da dies die parallele Herausführung der unverstärkten analogen Signale erfordern würde, was in Anbetracht der geringen Ströme und der hohen Frequenzen zu Störungen durch Übersprechen führen würde. Selbst wenn eine AD-Wandlung direkt im Detektorpixel möglich wäre, würde der Ansatz extrem hohe, derzeit technisch nicht realisierbare Datenraten erfordern.

Es besteht daher das Bedürfnis, verbesserte optische Messvorrichtungen sowie Verfahren zur Messung eines Objektes vorzusehen, mit der im gleichen Zeitraum eine höhere Auflösung erreichbar ist.

### ZUSAMMENFASSUNG DER ERFINDUNG

Diesem Bedürfnis wird mit den Gegenständen der unabhängigen Patentansprüche Rechnung getragen. Weiterbildungen und Ausgestaltungsformen des vorgeschlagenen Prinzips sind in den Unteransprüchen angegeben.

Wie erwähnt, bilden die Detektion, Auslesung und Auswertung der Daten ein erhebliches Hindernis auf dem Weg zu einer FMCW-Kamera, also einem "Flash"-FMCW-Lidar-System.

In konventionellen Systemen wurde daher unter anderem vorgeschlagen, das Problem dadurch zu umgehen, indem Einzeldetektoren bzw. Paare von differentiellen Detektoren, gekoppelt an monomodige Wellenleiter verwendet werden. Die Abdeckung eines größeren Sichtfeldes wird durch Scannen kombiniert mit einer parallelen Anwendung mehrerer Einzelsysteme, ggf. in einen gemeinsamen integrierten photonischen Schaltkreis, realisiert. Die DE 10 2020 105 353 A1 zeigt diesbezüglich einen Lösungsansatz für das Problem der optischen Überlagerung von Signal und lokalem Oszillator auf einem Detektorarray mittels gegenläufiger Lichtausbreitung der beiden Signale, ohne jedoch eine hierfür optimierte Detektorstruktur zu zeigen oder auch weiterhin auf das Problem der sehr hohen notwendigen Datenverarbeitung einzugehen.

Letzteres Problem ist auch bereits von time-of-flight (ToF) Lidar bekannt. Eine bekannte Detektionsmethode basiert auf APDs, deren Signal zuerst analog verstärkt und dann digitalisiert wird, um dann nach dem detektierten, vom Objekt zurückgestreuten Laserpuls zu suchen. Auch diese existieren nur in Form von eindimensionalen Reihendetektoren, da eine Signalauslesung in 2D-Arrays technisch nicht in der erforderlichen Echtzeit möglich ist. Mit diesen Reihendetektoren können scannende Systeme realisiert werden, die aber wiederum bewegliche Teile benötigen, welche die maximal mögliche Scanfrequenz des Gesichtsfeldes des Detektors begrenzen.

Die technisch verfügbaren Flash-Systeme, also Sensoren, die ohne bewegliche Teile ein räumliches Bild liefern, nutzen verschiedene Methoden zur effektiven Reduzierung der zu übertragenden Datenmenge oder zur Vereinfachung der Datenerzeugung. In SPAD-Arrays entfällt wegen des hohen von einer einzelnen Photonenabsorption erzeugten Stroms die Notwendigkeit der analogen Verstärkung und der Digitalisierung, da jeder Puls direkt als digitales Signal ausgewertet werden kann. Allerdings kann ein SPAD-Pixel nur eine begrenzte Zahl an Signalen pro Zeiteinheit erzeugen, da nach einem erfolgten Lawinendurchbruch das dafür notwenige elektrische Feld zusammenbricht und erst wieder aufgebaut werden muss.

Daher wird in ToF-Systemen mit SPAD-Arrays eine Statistik von entweder mehreren parallel verschalteten SPADs oder eine statistische Auswertung der Messungen an mehreren Laserpulsen nacheinander benötigt. Für die Analyse in den kontinuierlich arbeitenden Lasersystemen, bei denen ein Schwebungssignal erzeugt wird, sind diese Detektoren damit nicht geeignet.

Ebenso sind ToF Kameras möglich, die auf der Messung der Phasenverschiebung eines periodisch in der Intensität modulierten Lichts aufgrund der Laufzeit zu einem Objekt und zurück beruhen. Hier werden Detektoren eingesetzt, die die Phase durch Aufteilung des empfangenen Signals in mehrere zeitliche Bins und eine nachfolgende entsprechende Signalauswertung bestimmen.

Eine andere Lösung besteht in einer Herangehensweise ähnlich zu CMOS Kameras. Bei diesen werden alle Pixel synchron schnell und kurzzeitig aktiviert und deaktiviert. So kann ein 2-d-Bild aufgenommen werden, das nur das Signal zeigt, das in einem engen Zeitintervall einfällt. Dieses enge Zeitintervall entspricht, getriggert nach dem ausgesendeten Laserpuls, Objekten, die sich in einem bestimmten Entfernungsbereich befinden. Für eine komplette Abdeckung des gesamten zu messenden Entfernungsbereich sind damit mehrere aufeinanderfolgende Messungen mit je (mindestens) einem Laserpuls notwendig. Die zu übermittelnden Daten beschränken sich auf einen Helligkeitswert pro Entfernungsbereich und Pixel.

Aufgrund der Lichtlaufzeit kann ohnehin höchstens alle 2-5 µs eine neue Messung erfolgen, so dass höchstens in diesem Intervall die Bildinformation ähnlich zur Information einer herkömmlichen CMOS-Kamera auszulesen ist. Die Datenrate ist damit vergleichbar zu einer Hochgeschwindigkeits-Videokamera und technisch machbar, aber sehr aufwendig. Auch die oben erwähnten ToF Kameras arbeiten mit der gleichen oder einer ähnlichen Geschwindigkeit.

Der Erfinder schlägt nun eine weitere Lösung vor, bei der das Schwebungssignal, also das Signal aus dem überlagerten rückreflektierten Licht und einem von dem Laser abgeleiteten Lichtanteil von einem Detektor erfasst wird. Das Detektorsignal und im Besonderen die Amplitude des Detektorsignals wird nun während einer Messung in mehreren insbesondere gleich langen Zeitabschnitten, sogenannter Zeitbins separat erfasst und ausgewertet. Diese Zeitbins sind in Form von Speichern realisiert, die während der Messung mit einer definierten Schaltfrequenz zyklisch angesteuert werden, so dass sich in den Speichern die Signalanteile mit der Schwebungsfrequenz akkumulieren.

Die Ansteuerung der Speicher mit unterschiedlichen Schaltfrequenzen und die Auswertung der akkumulierten Ladung dieser Speicher erlaubt es nun Frequenzkomponenten in der Schwebungsfrequenz zu bestimmen. Dieser Ansatz ist ähnlich zu einer diskreten Fouriertransformation, wobei hier die Transformation bereits frühzeitig im Detektor stattfindet, so dass auf eine AD-Wandlung des detektierten Schwebungssignals verzichtet werden kann.

Vereinfacht gesagt wird das Schwebungssignal mit Hilfe der zyklisch angesteuerten Speicher gefaltet, wobei sich bei einer Übereinstimmung (oder einem Vielfachen davon) eine Akkumulation und damit ein Auswertesignal ergibt, deren Stärke in einem definierten Zusammenhang zur Amplitude der Frequenz des Schwebungssignals steht. Demzufolge kann durch ein Durchfahren durch mehrere Schaltfrequenzen ein Frequenzspektrum des Schwebungssignals ermittelt und so auf Entfernungen zu einem oder mehreren Objekten rückgeschlossen werden.

Die Entfernungsmessung erfolgt entsprechend nach dem vorgeschlagenen Prinzip für jede zu detektierende Schwebungsfrequenz einzeln (nämlich durch die Ansteuerung mit einer dazu korrespondierenden Schaltfrequenz) mit einer sich aus der Messdauer ergebenden Breite. Die gesamte Information über alle zu messenden Entfernungen bzw. Frequenzen ergibt sich aus mehreren solchen Einzelmessungen.

Mit dem vorgestellten Prinzip kann so ein zweidimensionaler FMCW-Detektor mit paralleler Auslesung der Entfernungsdaten realisiert werden, da durch eine Ansteuerung einzelner Detektorelemente mit geeigneter Schaltfrequenz sich eine beträchtliche Datenreduktion realisieren lässt. Die Fourierkomponenten des Schwebungssignals werden direkt im Sensorarray bestimmt und das analoge Schwebungssignal muss somit nicht separat ausgelesen und verarbeitet werden. Entsprechend entfällt auch eine aufwendigere Berechnung der Fouriertransformation.

Gleichzeitig bleiben die Vorteile eines FMCW-Systems erhalten, d.h. die Laservorrichtung bzw. der Sender ist mit verschiedenen Detektortypen kombinierbar. Es lassen sich optische Systeme ohne bewegliche Teile einsetzen, aber auch System mit Spiegeln oder anderen beweglichen optischen Komponenten. Durch die Überlagerung im Detektor wird eine geringere Hintergrundlichtempfindlichkeit erreicht, die sich durch einen differentiellen Detektor noch weiter reduzieren lässt. Entsprechend wird das Signal/Rauschverhältnis verbessert.

Eine Auswahl der Schaltfrequenz erlaubt es, Messungen in bestimmten Messbereichen vorzunehmen, um so schnell ein genaues Ergebnis erhalten zu können. Dies führt zu einer verbesserten und erhöhten Bildrate, was neben Anwendungen im Kraftfahrzeugbereich auch für Automatisierungsanwendungen interessant erscheint.

In einem Aspekt schlägt der Erfinder nun eine optische Messvorrichtung zum Erfassen eines Objektes vor. Das Objekt befindet sich hierzu in einem von der optischen Messvorrichtung erfassten Raum, und zwar bis zu einer maximalen Distanz. Die optische Messvorrichtung umfasst eine Laservorrichtung, die zur Abgabe eines in seiner Frequenz durchstimmbaren Laserstrahls ausgebildet ist. Dies kann insbesondere ein Einzelmodenlaserstrahl sein.

Der Durchstimmbereich der Laservorrichtung kann dabei beispielsweise 1Ghz betragen oder in einigen Aspekten auch zwischen 500 MHz und 5 GHz und insbesondere zwischen 800MHz und 1,75 GHz und insbesondere zwischen 900 MHz und 1,25 GHz liegen. In einigen Aspekten ist die Laservorrichtung ausgebildet, den oben angegebenen Frequenzbereich während einer Zeitdauer im Bereich von 3 µs bis 20 µs, insbesondere aber um 8 µs bis 12 µs durchzustimmen. In einigen Aspekten ist die Zeitdauer, in der der Frequenzbereich durchgestimmt wird, von der Größe des durchzustimmenden Frequenzbereichs abhängig.

In einigen weiteren Aspekten ist die Laservorrichtung ausgebildet, den Frequenzbereich von einer ersten Frequenz f1 zu einer zweiten Frequenz f2 durchzustimmen und anschließend von der zweiten Frequenz f2 wieder zu der ersten Frequenz f1. Dadurch entsteht ein Frequenzdurchlauf, der auch als aufsteigende und absteigende Rampe bezeichnet wird. Alternativ kann die Laservorrichtung auch dazu ausgebildet sein, lediglich einen Ast einer auf- und absteigenden Rampe zu erzeugen, d.h. bei der jeweiligen Endfrequenz wieder an die Anfangsfrequenz zurückzuspringen. In einem solchen Fall ist die Laservorrichtung während des Rücksprungs in einigen Aspekten abgeschaltet.

In diesem Zusammenhang bedeutet die Terminologie eines Durchstimmens eines Frequenzbereichs, dass die Laservorrichtung in seiner Frequenz durchstimmbares Laserlicht erzeugt. Entsprechend erzeugt die Laservorrichtung in einer für das vorgeschlagene Prinzip vorgesehenen Anwendung Laserlicht, dessen Frequenz sich über die oben genannte Zeitdauer eines Durchlaufs von der Frequenz f1 hin zur Frequenz f2 ändert.

In einigen Aspekten umfasst die Laservorrichtung einen Laser zur Erzeugung von Laserlicht mit lediglich einer festen Frequenz. Ein Durchstimmen der Frequenz des Laserlichts kann beispielsweise durch einen optischen Modulator erfolgen, der dem Laser in dessen Strahlengang nachgeordnet ist.

Die Messvorrichtung nach dem vorgeschlagenen Prinzip umfasst weiterhin einen Strahlteiler, der ausgebildet ist, einen Teil des von der Laservorrichtung im Betrieb abgegebenen Laserstrahls abzuzweigen. Je nach Ausgestaltung der Laservorrichtung kann der Strahlteiler zwischen Laser zur Erzeugung von Licht fester Frequenz und dem optischem Modulator oder auch hinter dem optischen Modulator angeordnet sein. Der Strahlteiler kann in einigen Aspekten den optischen Modulator beinhalten. In anderen Aspekten umfasst der Strahlteiler einen teildurchlässigen Spiegel oder auch einen Beamsplitter, um einen Teil des von der Laservorrichtung erzeugten Laserlichts als Lokaloszillatorsignal abzuzweigen.

Die Messvorrichtung umfasst weiterhin eine optische Vorrichtung, die ausgebildet ist, einen abgezweigten Teil mit einem Teil eines von einem Objekt reflektierten Lichts zu überlagern. Die optische Vorrichtung kann zum einen eine Projektionsoptik umfassen, mit deren Hilfe ein Raum vor der Messvorrichtung überstrahlt werden kann. Dazu kann die Projektionsoptik einen in seiner Ausrichtung veränderbaren Spiegel oder auch ein entsprechendes Linsensystem umfassen. Es ist aber auch möglich, ohne bewegliche Teile auszukommen und ein Abtasten des Raumes auf elektronischem oder optischem Wege durch geeignete Modulatoren oder andere fest angeordnete Elemente zu erreichen. In einigen Aspekten ist eine Projektionsoptik gleichzeitig auch als Sammeloptik ausgeführt, so dass von einem Objekt reflektiertes Laserlicht auf eine Detektorvorrichtung leitbar ist.

Sofern die Sammeloptik durch die Projektionsoptik gebildet ist, so kann eine zusätzliche laufrichtungsabhängige Strahltrennung erforderlich sein, beispielsweise durch einen optischen Zirkulator oder durch einen polarisationsabhängigen Strahlteiler.

Die Messvorrichtung umfasst nach dem vorgeschlagenen Prinzip weiterhin eine Detektorvorrichtung, die eingerichtet ist, das überlagerte Licht zu empfangen und ein davon abhängiges Signal zu erzeugen. In einigen Aspekten erfolgt die Überlagerung des Lichtes bereits vor einer Detektorfläche. In diesen Fällen kann beispielsweise die optische Vorrichtung bereits als Mischer ausgebildet sein oder sie umfasst einen solchen. In diesen Fällen spricht man auch von gleichförmiger Überlagerung, d.h. der abgezweigte Teil des Laserlichts und das von einem Objekt reflektierte Licht fallen im Wesentlichen von einer Seite her auf die Detektorfläche, d.h. ein Winkel zwischen den beiden Lichtanteilen ist kleiner als 10°, bevorzugt kleiner als 5°. In einigen Aspekten wird eine phasenrichtige Überlagerung auf der gesamten Fläche des Detektors vorgeschlagen, d.h. eine relative Phasenverschiebung von weniger als 180° und insbesondere weniger als 90° über die Kantenlänge des Detektors. Bei einer realistischen Detektorgröße von 10 µm und einer Wellenlänge von 800-1600 nm sind damit größere Winkel nicht möglich.

In einer alternativen Ausgestaltung sind die optische Vorrichtung und die Detektorvorrichtung für eine gegenläufige Überlagerung ausgeführt, d.h. ein Winkel zwischen den beiden Lichtanteilen beträgt mehr als 90°. In einigen Ausgestaltungen erfolgt die Überlagerung in der Detektorvorrichtung selbst, wobei beispielsweise der abgezweigte Teil von einer ersten Seite auf die Detektorvorrichtung geleitet wird, der von dem Objekt reflektierte Teil hingegen von einer anderen Seite.

Weiterhin umfasst die Messvorrichtung eine Auswerteeinrichtung, die wenigstens zwei erste Ladungsspeicher zum Speichern einer zum Signal korrespondierenden Ladung aufweist. Diese sind mit der Detektorvorrichtung über eine Schaltvorrichtung verbunden. Die Auswerteeinrichtung ist nun ausgestaltet, die wenigstens zwei ersten Ladungsspeicher basierend auf ersten Schaltsignalen zyklisch mit der Detektorvorrichtung zu verbinden. Die Schaltfrequenzen der beiden Schaltsignale sind dabei unterschiedlich und werden nacheinander erzeugt.

Unter dem Begriff eines zyklischen Verbindens oder zyklischen Koppelns wird in dieser Anmeldung verstanden, dass die wenigstens zwei Ladungsspeicher abwechselnd nacheinander während einer oder mehreren Perioden des Schaltsignals mit der Detektorvorrichtung verbunden werden, so dass jeder Ladungsspeicher während einer oder mehrerer Perioden des Schaltsignals mit der Detektorvorrichtung verbunden wird und die Zeiten, mit der die Ladungsspeicher mit der Detektorvorrichtung verbunden sind im wesentlichen gleich lang sind. Bei Messungen über mehrere Perioden des Schaltsignals ist auf aufgrund der zyklischen Kopplung sichergestellt, dass die wenigstens zwei Ladungsspeicher immer während des gleichen Teils der Periode mit der Detektorvorrichtung verbunden sind.

Auf diese Weise werden die oben genannten Zeitbins erzeugt. Der Inhalt der Ladungsspeicher korrespondiert zu einem Wert, der sich aus der Faltung des Schwebungssignals mit der Schaltfrequenz ergibt. Sind beispielsweise die Frequenzen der beiden Signale gleich und ebenso phasengleich, so wird pro Periode ein mit der Amplitude korrespondierender Wert abgespeichert.

Für diesen Zweck steht erfindungsgemäß weiterhin eine Ausleseeinheit zur Verfügung, welche zum Auslesen und Differenzbildung der in den ersten Ladungsspeichern gespeicherten Ladung jeweils nach der abwechselnden Kopplung mit einem ersten der wenigstens zwei ersten Schaltsignale und nach der Kopplung mit einem zweiten der wenigstens zwei ersten Schaltsignale ausgebildet ist. Die Ausleseeinheit ist somit ausgeführt, die Werte der beiden Ladungsspeicher voneinander zu subtrahieren. Bei dem oben genannten Beispiel einer Übereinstimmung in Phase und Frequenz bleibt auf diese Weise ein Wert übrig, der mit zunehmender Messdauer über mehrere Perioden des Schaltsignals hinweg ansteigt (oder abfällt, je nach Polarität). Sind die Frequenzen hingegen unterschiedlich, so werden sich die in den Ladungsspeicher gespeicherten Ladungen herausmitteln, so dass es nicht zu einem über längere Messdauer hinweg ansteigenden Wert (oder abfallenden Wert kommt) .

In einigen Aspekten ist die Ausleseeinheit zusammen mit der Auswertevorrichtung ausgestaltet, über mehrere Rampen des Laserlichtsignals hinweg verschiedene Schaltfrequenzen auszuwählen. Jede Schaltfrequenz korrespondiert zu einer Entfernung. Aus der Auswertung der akkumulierten Ladungen bei jeder einzelnen Schaltfrequenz erhält man so direkt eine Anzahl der Fourierkomponenten des Schwebungssignals bei einer Vielzahl von Stützstellen.

Das erfindungsgemäße Prinzip schlägt somit vor, eine durchstimmbare Laservorrichtung mit einem Detektor zu koppeln, der ein Schwebungssignal aus einem abgezweigten Teil des durchstimmbaren Laserlichts und einem von einem Objekt zurückreflektierten Anteil detektiert. Die Detektorvorrichtung ist mit einem Schaltkreis verbunden, der eine Umleitung des Fotostroms in einen von mehreren, vorzugsweise 4, Ladungsspeichern ermöglicht. Diese Umschaltung erfolgt zyklisch mit einer vorgegebenen, steuerbaren Schaltfrequenz. Hat das empfangene Signal eine messbare Amplitude bei der Schaltfrequenzkomponente, mit der die Umschaltung erfolgt, so ergeben sich systematische Unterschiede zwischen den Ladungen der Ladungsspeicher. Daraus lässt sich die Signalamplitude bei der Umschaltfrequenz berechnen. Diese Signalamplitude wird ausgelesen und der Umschaltfrequenz zugewiesen.

Anschließend erfolgen weitere Messungen mit anderen Umschaltfrequenzen, wodurch ein beliebig wählbarer Bereich des Frequenzspektrums and Schaltfrequenzen nacheinander abgedeckt werden kann. Die ausgelesenen Daten ergeben direkt das Frequenzspektrum.

In einigen Aspekten weist die Detektorvorrichtung zwei, insbesondere benachbart angeordnete Detektoren auf, von denen einer mit den wenigstens zwei ersten Ladungsspeichern gekoppelt ist und der andere der zwei benachbarten Detektoren über eine weitere erste Schaltvorrichtung mit zwei weiteren ersten Ladungsspeichern zyklisch gekoppelt ist; wobei jedes Schaltsignal für die weitere erste Schaltvorrichtung jeweils phasenverschoben, insbesondere um jeweils λ/4 phasenverschoben zu den wenigstens zwei ersten Schaltsignalen ist.

In einigen Ausgestaltungen liegt eine Kantenlänge eines einzelnen Detektors im Bereich von 2µm bis 30 µm. Mehrere derartig kleine Flächen lassen sich als Dioden monolithisch fertigen, so dass sich auf diese Weise entsprechende Arrays bilden lassen.

In einer anderen Ausgestaltung weist die Auswerteeinrichtung zwei weitere erste über die Schaltvorrichtung mit der Detektorvorrichtung abwechselnd gekoppelte Ladungsspeicher zum Speichern des Signals auf, derart, dass die vier Ladungsspeicher zyklisch pro Periode der ersten Schaltsignale mit der Detektorvorrichtung verschaltet sind.

Beide hier vorgestellte Ergänzungen erlauben es auch, Schwebungssignale sicher zu detektieren, deren Phase gegenüber der Schaltfrequenz verschoben ist. Im Wesentlichen werden durch die beiden Lösungen der Realteil und Imaginärteil des Schwebungssignals erfasst. Eine Auswertung erfolgt in der Ausleseeinheit durch eine geeignete Differenzbildung der Ladungsspeicher.

In diesem Zusammenhang ist es möglich, das Ergebnis der Differenzbildung in ein digitales Signal zu wandeln. So kann die Ausleseeinheit in einigen Aspekten einen AD-Wandler umfassen. Die Geschwindigkeit des AD-Wandlers kann hierbei niedriger als in konventionellen Lösungen sein, da die Fourierkomponenten bei den verschiedenen Schaltfrequenzen bereits in der Auswerteinheit ermittelt werden, und das Ergebnis der Wandlung somit erst nach einer weiteren Messung zur Verfügung stehen muss. Mit anderen Worten hat der AD-Wandler ausreichend Zeit, ein Signal zu wandeln, bis eine folgende Messung abgeschlossen ist. Dies verringert die technischen Anforderungen and die Wandlergeschwindigkeit bzw. ein AD-Wandler kann somit auch eine höhere Auflösung bieten.

In einigen weiteren Aspekten umfasst die Auswertevorrichtung wenigstens zwei zweite Ladungsspeicher zum Speichern einer zum Signal korrespondierenden Ladung, die in Antwort auf wenigstens zwei unterschiedliche Schaltfrequenzen aufweisende zweite Schaltsignale über eine zweite Schaltvorrichtung mit der Detektorvorrichtung zyklisch gekoppelt sind. Entsprechend ist auch die Ausleseeinheit ausgeführt zum Auslesen und Differenzbildung der in den zweiten Ladungsspeichern gespeicherten Ladung jeweils nach der abwechselnden Kopplung mit einem ersten der wenigstens zwei zweiten Schaltsignale und nach der Kopplung mit einem zweiten der wenigstens zwei zweiten Schaltsignale.

Diese Ausgestaltung ermöglicht es, während nur eines Durchlaufs der Laservorrichtung das entstandene Schwebungssignal mit zwei unterschiedlichen Schaltfrequenzen abzutasten und so pro Durchlauf zwei Fourierkomponenten bei den entsprechenden Schaltfrequenzen zu ermitteln. Dadurch lässt sich der interessante Frequenzbereich mit weniger Messungen erfassen, d.h. mit weniger Frequenzdurchläufen des Laserlichtsignals.

In einigen weiteren Aspekten ist die Detektorvorrichtung als ein Array mit einer Vielzahl von Detektoren ausgebildet, wobei jeder der Vielzahl von Detektoren über je eine Schaltvorrichtung der Auswerteeinheit mit je wenigstens zwei Ladungsspeichern der Auswerteeinheit zum Speichern einer zum Signal korrespondierenden Ladung in Antwort auf wenigstens zwei unterschiedliche Schaltfrequenzen aufweisende Schaltsignale über die jeweilige Schaltvorrichtung zyklisch gekoppelt ist.

Die Schaltfrequenzen der ersten Schaltsignale sind dabei unterschiedlich zu den Schaltfrequenzen der zweiten Schaltsignale. In einigen Aspekten können die Schaltsignale geeignet zueinander gewählt sein, um möglichst interessante Entfernungsbereiche schnell erfassen zu können. Auch ist es möglich, die Schaltsignale in ihrer Frequenz jederzeit verändern zu können. So können beispielweise die zweiten Schaltsignale dazu verwendet werden, einen speziellen Frequenzbereich genauer abzutasten, während die ersten Schaltsignale in größeren Frequenzsprüngen arbeiten. Bereits identifizierte Signale können so weiterverfolgt werden, um beispielsweise Dopplereffekte zu bestimmen und damit auf die Geschwindigkeit eines Objektes zurückzuschließen.

Es ist in diesem Zusammenhang zweckmäßig, dass das Schwebungssignal bereits recht groß ist, wenn das Detektorsignal auf mehrere Ladungsspeicher aufgeteilt wird. Um das Signal zu Rauschverhältnis zu verbessern kann beispielsweise die Messung verlängert werden, d.h. die Ladungsspeicher werden über mehrere Perioden zyklisch auf die Detektorvorrichtung geschaltet. Alternativ ist es in einigen Aspekten auch möglich einen rauscharmen Verstärker, insbesondere in Form eines Transimpedanzverstärkers zwischen Detektorvorrichtung und Auswertevorrichtung zu schalten.

Einige weitere Aspekte beschäftigen sich mit der Ausgestaltung der Detektorvorrichtung. In einigen Aspekten umfasst die Detektorvorrichtung einen oder mehrere Detektoren, die jeweils als differentielle Detektoren ausgebildet sind. Dadurch wird auf effektive Weise bereits Hintergrundlicht oder auch ein übriger Anteil des abgezweigten Teils herausgefiltert. Die beiden differentiellen Detektoren sind möglichst nahe zueinander angeordnet, so dass sie das vom gleichen Punkt an dem Objekt zurückreflektierte Licht empfangen.

In einigen Aspekten umfasst die Detektoranordnung ein zwei dimensionales Array mit mehreren in Reihen und Spalten angeordneten Detektoren. Diese können während der Messung beispielsweise dazu dienen, Hintergrundeffekte zu detektieren, aber auch mit entsprechenden Schaltsignalen beaufschlagt zu werden, um auf diese Weise die Fourierkomponenten schneller zu ermitteln. Der Vorteil einer solchen Ausgestaltung mit der Ansteuerung nach dem vorgeschlagenen Prinzip erlaubt es mit nur wenigen Durchläufen der Laservorrichtung (d.h. Durchstimmen des Laserlichts) den erfassten Raum in seiner Breite und im interessierenden Entfernungsbereich abzutasten.

In einigen Aspekten umfasst die Detektorvorrichtung einen Verstärker, insbesondere einen low-noise Transimpedanzverstärker, der zwischen der Schaltvorrichtung und den Detektoren angeordnet ist. Dieser verbessert das Signal/Rauschverhältnis, was insbesondere bei differentiellen Detektoren zweckmäßig erscheint, da diese bereits nicht erwünschte Anteile herausgefiltert haben.

Einige weitere Aspekte beschäftigen sich mit der Wahl der Schaltfrequenzen der Schaltsignale. Ein Schwebungssignal wird wie oben erläutert aus einer Reflexion eines Objektes in einer bestimmten Entfernung zur erfindungsgemäßen Messvorrichtung erzeugt, welches bei der gleichen (oder einer Vielfachen) der Schaltfrequenz ein Signal in den Ladungsspeichern erzeugt und damit zu einer korrespondierenden Fourierkomponente bei dieser Frequenz führt. Die Schaltfrequenzen entsprechen damit definierten Entfernungen zur Messvorrichtung in dem von der Vorrichtung erfassten Raum. In einigen weiteren Aspekten korrespondieren die Schaltfrequenzen für die ersten und/oder zweiten Schaltsignale daher zu einem Abstand von der optischen Messvorrichtung, der sich aus einer Schwebung des abgezweigten Teils und eines von einem Objekt reflektierten Lichts in diesem Abstand ergeben würde.

Einige Aspekte beschäftigen sich mit dem Zusammenhang zwischen einem Durchlauf der durchstimmbaren Laservorrichtung und der Messdauer der Schaltsignale. Es ist notwendig, dass die Messung abgeschlossen ist, während das Schwebungssignal anliegt, d.h. während sich die Frequenz der Laservorrichtung noch ändert bei gleichzeitiger Berücksichtigung der maximalen Entfernung, die sich wiederum aus der Dauer des Durchstimmvorgangs ergibt. Entsprechend wird in einigen Aspekten vorgeschlagen, eine Zeitdauer des Durchstimmens des von der Laservorrichtung abgegebenen Laserstrahls so zu wählen, dass sie größer ist, insbesondere um das doppelte oder mehr größer ist als eine Messdauer, bei der eines der ersten und/oder zweiten Schaltsignale anliegt. Alternativ ist auch die Messdauer kleiner als die Zeitdauer des Durchlaufs einer Frequenzrampe.

Es ist denkbar, die Auswertevorrichtung so auszugestalten, dass sie mehrere Schaltsignale mit unterschiedlichen Frequenzen während eines Durchlaufs der Frequenz des Laserlichts erzeugt. Entsprechend ist in einigen Aspekten vorgesehen, die Auswertevorrichtung auszubilden, um während einer Zeitdauer des Durchstimmens des von der Laservorrichtung abgegebenen Laserstrahls wenigsten zwei erste und/oder zweite Schaltsignale zu erzeugen.

In diesem Zusammenhang kann in einigen Aspekten vorgesehen sein, dass die Auswertevorrichtung auch die Laservorrichtung steuert, insbesondere den Start- und Stopzeitpunkt der Frequenzrampe des Laserlichts festlegt. In einigen weiteren Aspekten ist die Auswertevorrichtung zur Erzeugung von Schaltsignalen ausgeführt, die benachbarte Schaltfrequenzen aufweisen, wobei je zwei benachbarte Schaltfrequenzen der wenigstens zwei ersten und/oder der wenigstens zwei zweiten Schaltsignale jeweils äquidistante Abstände aufweisen.

Einige weitere Aspekte beschäftigen sich mit einem Verfahren mit Detektieren eines Objektes sowie dem Bestimmen einer Entfernung zu einem Objekt in einem Raum. Dabei soll die Entfernung zu einem Referenzpunkt oder auch einer Referenzebene bestimmt werden. Von diesem Punkt oder dieser Ebene aus wird ein Laserlicht ausgestrahlt, welches in seiner Frequenz verändert wird, so dass sich eine Frequenzrampe einstellt.

Bei dem Verfahren wird ein in seiner Frequenz durchstimmbares kontinuierliches Laserlicht erzeugt. Eine Änderung der Frequenz des Laserlichts stetig und vorzugsweise linear von einer ersten Frequenz zu einer zweiten Frequenz wird als Frequenzdurchlauf bezeichnet, wobei wenigstens zwei aufeinanderfolgende Frequenzdurchläufe des Laserlichts erzeugt werden.

Ein Teil des Laserlichts wird abgezweigt. Dabei kann entweder ein Teil des sich in seiner Frequenz verändernden Laserlichts abgezweigt werden, oder es wird Licht einer festen Frequenz abgezweigt, und der nicht abgezweigte Teil daraufhin in seiner Frequenz verändert, so dass der oben angesprochene Frequenzdurchlauf erzeugt wird.

Der abgezweigte Teil des Laserlichts wird anschließend mit einem von einem Objekt zurückreflektierten Anteil des Laserlichts zum Erzeugen eines Schwebungssignals überlagert.

Sodann wird eine Amplitude Schwebungssignals oder ein von diesem abgeleitetes Signal zyklisch abgetastet. Dieses Abtasten erfolgt über wenigstens zwei Perioden einer ersten Schaltfrequenz während eines ersten der wenigstens zwei Frequenzdurchläufe und über wenigstens zwei Perioden einer zweiten Schaltfrequenz während eines zweiten der wenigstens zwei Frequenzdurchläufe. Dabei wird jede Periode der ersten und zweiten Schaltfrequenzen in zwei oder auch 4 gleichlange aufeinanderfolgende Abschnitte unterteilt und die Amplitude des Schwebungssignals während dieser Abschnitte abgetastet und ein dazu korrespondierender Wert erstellt.

Anschließend lässt sich aus den gespeicherten Werten der Abschnitte der Periode der ersten Schaltfrequenz eine Fourierkomponente des Schwebungssignals bei der ersten Schaltfrequenz und aus den gespeicherten Werten der Abschnitte der Periode der zweiten Schaltfrequenz Fourierkomponente des Schwebungssignals bei der zweiten Schaltfrequenz ermitteln.

Auf diese Weise lassen sich in verschiedenen aufeinander folgenden Frequenzrampen jeweils Fourierkomponenten für verschiedene Schaltfrequenzen bestimmen, wobei die Schaltfrequenzen wiederum zu Entfernungen korrespondieren. Fourierkomponenten mit hohen Werten deuten somit auf ein Objekt bei der zu der jeweiligen Schaltfrequenz korrespondierenden Entfernung hin.

In einigen Aspekten ist es möglich, dass während eines Frequenzdurchlaufs nicht nur ein Abtasten mit einer ersten Schaltfrequenz erfolgt, sondern mit mehreren ersten unterschiedlichen Schaltfrequenzen. Auf diese Weise kann das Schwebungssignal während eines Durchlaufs mehrfach abgetastet und daraus mehrere Fourierkomponenten ermittelt werden. Beispielsweise kann das zyklische Abtasten einer Amplitude des Schwebungssignals mit mehreren ersten unterschiedlichen Schaltfrequenzen während eines ersten der wenigstens zwei Frequenzdurchläufe und mit mehreren zweiten unterschiedlichen Schaltfrequenzen während eines zweiten der wenigstens zwei Frequenzdurchläufe erfolgen.

In einem weiteren Aspekt umfasst der Schritt des zyklischen Abtastens ein Detektieren der Amplitude des Schwebungssignals und umwandeln in einen Fotostrom. Die Detektion kann in einigen Aspekten differentiell erfolgen, wodurch sich störende Hintergrundeffekte und Streulicht besser minimieren lassen. Ebenso ist es möglich den Fotostrom rauscharm zu verstärken. Beide Maßnahmen verbessern das Signal/Rauschverhältnis der vorgeschlagenen Lösung. Der Fotostrom kann in eine Ladung während jedes Abschnitts umgewandelt werden, die sich in entsprechenden Ladungsspeichern ablegen lässt. Die Umwandlung des Fotostrom in Ladungen ist zweckmäßig, da diese addiert werden können, um so den Fotostrom auch über mehrere aufeinanderfolgenden Perioden der ersten bzw. zweiten Schaltfrequenz zu erfassen.

Entsprechend ist in einigen Aspekten vorgesehen, die Ladungen während gleichen Abschnitten über mehrere Perioden hinweg zu akkumulieren, um dadurch die eventuell relativ kleinen Anteile zu verstärken. Beispielsweise werden so immer Ladungen des ersten Abschnitts der Perioden aufsummiert, gleiches gilt für die zweiten, dritten und vierten Abschnitte.

Es ist zweckmäßig, dass die Abtastdauer des zyklischen Abtastens zwischen 0,05 und 0,8 der Dauer eines Frequenzdurchlaufs entspricht. Dadurch werden die Amplituden des Schwebungssignals bzw. Der dazu korrespondierenden Ladung über eine Vielzahl von Perioden erfasst. Allgemein kann man gesamte Dauer des Frequenzdurchlaufs nutzen, abzüglich der Lichtlaufzeit und in der Praxis abzüglich eines kurzen Anfangs- und Endbereichs, in dem sich der Frequenzdurchlauf technisch nicht gut linearisieren lässt. Bei beispielsweise 10 µs Dauer des Frequenzdurchlaufs und 2 µs Lichtlaufzeit sind durchaus 7 µs Abtastdauer möglich.

Zudem lässt sich durch die bekannten Verhältnisse aus der Messdauer, der Dauer des Frequenzdurchlaufs und der detektierten gesamten Amplitude des aufsummierten Fotostrom weitere Information gewinnen. Ist die Abtastdauer relativ kurz, so kann während eines Frequenzdurchlaufs mehrmals zyklisch mit unterschiedlichen Frequenzen abgetastet werden. Die Differenz aus zwei benachbarten Schaltfrequenzen korrespondiert direkt zur Entfernungsauflösung.

In einigen Aspekten umfasst das zyklische Abtasten einer Amplitude des Schwebungssignals mit in zwei Abschnitten unterteilte Perioden der ersten und zweiten Schaltfrequenzen weitere Gesichtspunkte. Zum einen kann vorgesehen sein, das Schwebungssignal zweimal mit der gleichen Schaltfrequenz aber unterschiedlicher Phase abzutasten. Dies kann und sollte gegebenenfalls parallel erfolgen. Der Phasenunterschied sollte ein Viertel der Periode betragen. Dadurch lassen sich Amplitudenanteile (oder dazu korrespondierende Signale) bestimmen, die dem Realteil und Imaginärteil der Fourierkomponente entsprechen. Ebenso wird während des zweiten der wenigstens zwei Frequenzdurchläufe das Signal mit der zweiten Schaltfrequenz zweimal, insbesondere parallel aber ebenfalls um ein Viertel der Periode phasenverschoben abgetastet. Man erhält auf diese Weise sowohl den Real- als auch den Imaginärteil der Fourierkomponente für zwei verschiedene Frequenzen.

In einem anderen Aspekt können die verschiedenen Komponenten durch geeignete Summen und Differenzbildung der akkumulierten Ladungen bzw. Signalanteile der verschiedenen Abschnitte ermittelt werden. Bei einer Unterteilung in zwei Abschnitte pro Periode erfolgt dies durch Bilden einer Differenz aus den gespeicherten Werten der jeweiligen Abschnitte der Periode der ersten und zweiten Schaltfrequenz zur Erzeugung eines aus Real- oder Imaginärteil der Fourierkomponente des Schwebungssignals der ersten und zweiten Schaltfrequenz.

Wird hingegen eine Periode in vier Abschnitte unterteilt, so lässt sich durch eine Differenzbildung aus den Summen des ersten und zweiten Abschnittes sowie des dritten und vierten Abschnittes direkt der Realteil der Fourierkomponente des Schwebungssignals erzeugen, wobei dies für jede Schaltfrequenz separat durchführbar ist. Der Imaginärteil der Fourierkomponente des Schwebungssignals der ersten und zweiten Schaltfrequenz ergibt sich aus einer Differenz aus den Summen des ersten und vierten Abschnittes sowie des zweiten und dritten Abschnittes.

### KURZE BESCHREIBUNG DER ZEICHNUNGEN

Weitere Aspekte und Ausführungsformen nach dem vorgeschlagenen Prinzip werden sich in Bezug auf die verschiedenen Ausführungsformen und Beispiele offenbaren, die in Verbindung mit den begleitenden Zeichnungen ausführlich beschrieben werden.
Figur 1 zeigt in den Teilfiguren Frequenz-Zeitdiagramme, die zur Erläuterung verschiedener Aspekte zur Entfernungs- und Geschwindigkeitsmessung nach dem vorgeschlagenen Prinzip dienen;
Figur 2A zeigt eine schematische Darstellung einer ersten Ausführung einer optischen Messvorrichtung nach dem vorgeschlagenen Prinzip;
Figur 2B stellt eine schematische Darstellung einer zweiten Ausführung einer optischen Messvorrichtung nach dem vorgeschlagenen Prinzip dar;
Figur 2C ist eine schematische Darstellung einer dritten Ausführung einer optischen Messvorrichtung nach dem vorgeschlagenen Prinzip;
Figur 2D zeigt eine schematische Darstellung einer dritten Ausführung einer optischen Messvorrichtung nach dem vorgeschlagenen Prinzip;
Figur 3A ist eine schematische Darstellung einer ersten Ausführung einer Detektorvorrichtung, sowie einer damit verbundenen Ausleseeinheit zur Erläuterung einiger Aspekte des vorgeschlagenen Prinzips;
Figur 3B stellt eine schematische Darstellung einer zweiten Ausführung einer Detektorvorrichtung, sowie einer damit verbundenen Ausleseeinheit zur Erläuterung einiger Aspekte des vorgeschlagenen Prinzips dar;
Figur 4 zeigt eine schematische Darstellung einer dritten Ausführung einer Detektorvorrichtung;
Figur 5 stellt eine schematische Darstellung eines Ausschnittes aus einem Detektorarray zur Erläuterung einiger Aspekte des vorgeschlagenen Prinzips dar;
Figuren 6A bis 6C sind verschiedene Darstellungen von Signal-Zeit Diagrammen für den Fall einer Übereinstimmung der Frequenzen von Schwebungssignal und Schaltsignal;
Figur 6D zeigt verschiedene Aspekte eines Schaltsignals zur Erläuterung des vorgeschlagenen Prinzips;
Figuren 7A bis 7C sind verschiedene Darstellungen von Signal-Zeit Diagrammen für den Fall eines Versatzes der Frequenzen von Schwebungssignal und Schaltsignal;
Figuren 8A bis 8C sind weitere Darstellungen von Signal-Zeit Diagrammen für den Fall der Frequenzen von Schwebungssignal und Schaltsignal;
Figuren 9A und 9B zeigt Signal-Zeit Diagramme zur Erläuterung verschiedener Aspekte des vorgeschlagenen Prinzips;
Figur 10 zeigt eine schematische Darstellung eines Ausschnittes aus einem Detektorarray zur Erläuterung einiger Aspekte des vorgeschlagenen Prinzips;
Figur 11 ist ein Ausführungsbeispiel eines Verfahrens.

### DETAILLIERTE BESCHREIBUNG

Die folgenden Ausführungsformen und Beispiele zeigen verschiedene Aspekte und ihre Kombinationen nach dem vorgeschlagenen Prinzip. Die Ausführungsformen und Beispiele sind nicht immer maßstabsgetreu. Ebenso können verschiedene Elemente vergrößert oder verkleinert dargestellt werden, um einzelne Aspekte hervorzuheben. Es versteht sich von selbst, dass die einzelnen Aspekte und Merkmale der in den Abbildungen gezeigten Ausführungsformen und Beispiele ohne weiteres miteinander kombiniert werden können, ohne dass dadurch das erfindungsgemäße Prinzip beeinträchtigt wird. Einige Aspekte weisen eine regelmäßige Struktur oder Form auf. Es ist zu beachten, dass in der Praxis geringfügige Abweichungen von der idealen Form auftreten können, ohne jedoch der erfinderischen Idee zu widersprechen.

Außerdem sind die einzelnen Figuren, Merkmale und Aspekte nicht unbedingt in der richtigen Größe dargestellt, und auch die Proportionen zwischen den einzelnen Elementen müssen nicht grundsätzlich richtig sein. Einige Aspekte und Merkmale werden hervorgehoben, indem sie vergrößert dargestellt werden. Begriffe wie "oben", "oberhalb", "unten", "unterhalb", "größer", "kleiner" und dergleichen werden jedoch in Bezug auf die Elemente in den Figuren korrekt dargestellt. So ist es möglich, solche Beziehungen zwischen den Elementen anhand der Abbildungen abzuleiten.

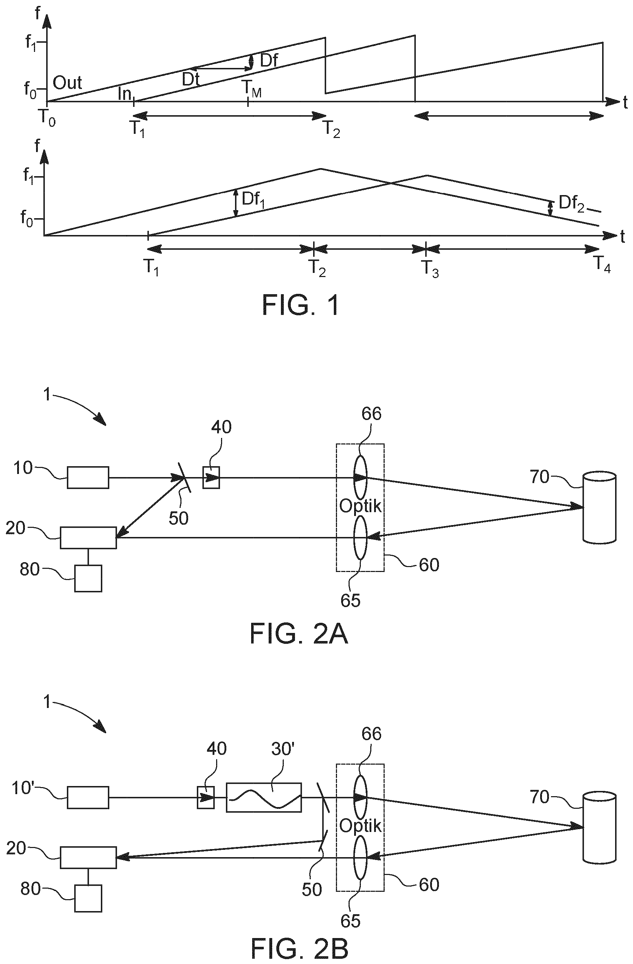

Die Figur 1 zeigt in ihren beiden Teilfiguren jeweils ein Frequenz-Zeit Diagramm zur Erläuterung einer Frequenzrampe des Laserlichts, der Reflexion an einem Objekt und der daraus resultierenden Schwebungsfrequenz. Die obere Teilfigur bildet dabei ein Beispiel für die Messung an einem stationären Objekt. Die Ausgangsfrequenz des von der Laservorrichtung abgegeben Laserlichtsignals hier bezeichnet mit OUT steigt während eines Zeitraums T0 bis zu einem Zeitpunkt T2 linear von einer Anfangsfrequenz f0 auf eine Endfrequenz f1 an.

Diese Zeitdauer zwischen T0 und T2 wird als Chirp, als Rampe oder auch als Frequenzdurchlauf bezeichnet. Anschließend fällt es im Zeitpunkt T2 hier vereinfacht dargestellt auf die Ausgangsfrequenz f0 zurück und der Anstieg beginnt erneut. Typische Frequenzdurchläufe liegen in einem Bereich von 800 MHz bis 1 GHz, wobei die Zeit für einen solchen Durchlauf im Bereich weniger µs liegt, beispielsweise im Bereich zwischen 8 µs und 12 µs. Es sind durchaus weitere Bereiche möglich, von wenigen hundert MHz bis zu 3 oder sogar 5 GHz. Die Dauer eines Frewquenzdurchlaufs liegt mindestens bei der Lichtlaufzeit + einige Perioden des Schwebungssignals, woraus ca 2-3 µs als Untergrenze resultieren. In einigen Implementierungen werden Durchläufe mit einer Dauer im Bereich von 100 µs verwendet, was in der Praxis die Zahl der Messungen pro Zeit limitiert. 4 µs bis 20 µs sind daher typisch.

Wenn die Zeitdauer bei gleichbleibender Frequenz länger ist, wird die maximale Entfernung zum Detektieren eines Objektes vergrößert (unter der Annahme, dass eine Verschlechterung des reflektierten Signals aufgrund der zunehmenden Entfernung keine Rolle spielt). Umgekehrt führt eine größere Differenzfrequenz zwischen den Frequenzen f0 und f1 generell zu einer größeren Bandbreite der Schwebungsfrequenz und damit einer höheren Orts- bzw. Entfernungsauflösung.

Das von der Laservorrichtung ausgesandte Laserlicht wird aufgeteilt und ein Teil wird direkt in den Detektor abgeleitet. Der andere Teil trifft in einiger Entfernung auf ein Objekt und wird von diesem zurück reflektiert. Die Zeitdauer des zurückreflektierten Lichtes ist in der Teilfigur mit In bezeichnet und ist bei einem stationären Objekt konstant. Das zurückreflektierte Licht fällt mit einem abgeleiteten Teil nun in den Detektor. Aufgrund der zurückgelegten Wegstrecke ist dieser Lichtanteil nun um die Zeit Dt verzögert. Wegen des gleichzeitig durchgeführten Frequenzdurchlauf ergibt sich zudem, dass der abgeleitete Teil nun eine andere Frequenz aufweist als der von dem Objekt reflektierte Anteil.

Daraus entsteht zum Messzeitpunkt Tm in dem Detektor durch Überlagerung ein Schwebungssignal, dessen Schwebungsfrequenz der Differenzfrequenz Df entspricht. Mit anderen Worten ergibt sich zu einem Messzeitpunkt Tm im Detektor eine bestimmte Ausgangsfrequenz des frequenzmodulierten Laserlichts sowie eine davon unterschiedliche Frequenz des zurückreflektierten Lichts, welches auf den Detektor fällt. Die Überlagerung der beiden Signale entspricht einem Mischvorgang, sodass sich eine Schwebung einstellt, dessen Differenzfrequenz mit Df bezeichnet wird. Die Schwebungsfrequenz als Differenzfrequenz Df ist wiederum proportional zum Laufzeitunterschied der Lichtstrahlen und damit zur Entfernung.

Wie in der Figur 1 zu erkennen, ergibt sich aufgrund des endlichen Frequenzdurchlaufs zwischen den Frequenzen f0 und f1 ein maximaler Laufzeitunterschied und damit auch eine maximale Entfernung, die im Wesentlichen durch die Dauer der Rampe oder des Frequenzdurchlaufs gegeben ist. Oftmals entspricht dies in etwa der halben Zeitdauer eines Frequenzdurchlaufs. Beispielsweise sei ein Durchlauf eines Laserlichts von der Ausgangsfrequenz f0 zu f1 10 µs lang. Dann erreicht ein nach 1 µs reflektierter Lichtstrahl mit der Frequenz f0 nach 2 µs den Detektor und überlagert dort mit der mit dem abgezweigten Teil des Laserlichts der Frequenz f1. Aus der Lichtlaufzeit von 2 µs ergibt sich eine Hin- und Rückstrecke von ca. 600 m und damit für eine einzelne Strecke von 300 m.

Die erzeugte Schwebungsfrequenz Df lässt sich messen, indem das von dem Detektor erzeugte Signal einer Auswerteschaltung zugeführt wird, die mittels des hier vorgeschlagenen Prinzips das erfasste Detektorsignal zyklisch mehreren Ladungsspeichern zuführt, wobei die Schaltungsfrequenz bei jedem Durchlauf des Laserlichts oder auch mehrmals in einem Durchlauf variiert wird. Wie noch weiter unten erläutert, ergibt sich daraus direkt die Fourierkomponente des Detektorsignals bei dieser Schaltfrequenz. Mit mehreren Messungen, z.B. ca. 100 Messungen lassen sich so 100 Frequenzpunkte im Spektrum innerhalb von ca. 1 ms bereitstellen, von denen jeder Punkt einer Entfernung entspricht.

Die mehreren Einzelmessungen werden auch als Messreihe bezeichnet, wobei die Anzahl der Messungen mit unterschiedlichen Schaltfrequenzen zur Entfernungsauflösung korrespondieren. Unter dem Begriff Messreihe wird in diesem Zusammenhang eine Vielzahl von Durchläufen einer Frequenzrampe des Laserlichts verstanden, wobei bei jedem Durchlauf die Ladungsspeicher zyklisch mit wenigstens einer Schaltfrequenz, bevorzugt mehrmals angesteuert und anschließend ausgelesen werden. Dadurch ergeben sich die Fourierkomponenten des Schwebungssignals bei den verschiedenen Schaltfrequenzen.

Bei einer ausreichend starken Intensität des vom Strahlteiler 50 in den Detektor umgelenkten Anteils wird einerseits eine Linearität der Schwebung gewährleistet und andererseits lassen sich Hintergrundlicht und andere Störanteile auf geeignete Weise herausfiltern, da diese nicht kohärent zur abgestrahlten und reflektierten Laserstrahlung sind. In einigen Aspekten kann die Detektorvorrichtung zu diesem Zweck zudem wellenlängen- bzw. frequenzselektive Filter umfassen, um das Signalrauschverhältnis weiter zu verbessern. Ebenso kann die Detektionseinheit ein Paar differentieller Detektoren mit einem vorgeschalteten Strahlteiler aufweisen.

Die untere Teilfigur der Figur 1 zeigt die Situation bei einem sich zur optischen Messvorrichtung relativ bewegenden Objekt. Die Relativbewegung führt zu einem Dopplereffekt und damit einer Veränderung der gemessenen Differenzfrequenz. Insbesondere ist es mittels mehrerer Messungen mit gleicher Frequenzrampe in diesem Fall nicht möglich, zu entscheiden, ob sich das Objekt auf die optische Messvorrichtung zu- oder wegbewegt, bzw. ob es sich überhaupt bewegt und nicht einfach ein relativ stationäres Objekt in größerer oder geringerer Entfernung ist. Entsprechend sind zwei Messungstypen notwendig, die sich in der Rampe, d.h. der inkrementellen Frequenzänderung unterscheiden und beispielsweise während der Zeitpunkte T1 bis T2 sowie T3 bis T4 durchgeführt werden. Auch hier erfolgt eine Vielzahl dieser Rampen, um so sich bewegende Objekte bei verschiedenen Entfernungen zu detektieren.

Während des ersten Messfensters zwischen den Zeitpunkten T1 bis T2 ergibt sich eine Differenzfrequenz Df1, die aufgrund der Dopplerverschiebung des sich bewegenden Objektes etwas größer ist. Während der zweiten Messperiode zwischen den Zeitpunkten T3 und T4 ergibt sich eine entsprechend kleinere Differenzfrequenz Df2. Die Distanz zu dem sich bewegenden Objekt kann so durch die Summe dieser Differenzfrequenzen Df1 + Df2 ermittelt werden, die Geschwindigkeit ergibt sich aus der Differenz Df1 - Df2 der jeweiligen Werte.

Wie aus beiden Teilfiguren zu entnehmen, ist die Messdauer insbesondere bei sich bewegenden Objekten deutlich länger als die korrespondierende Messdauer bei stationären bzw. sich nicht relativ bewegenden Objekten. Dies ergibt sich schon dadurch, dass für eine Geschwindigkeitsmessung ein zweiter Durchlauf mit Frequenzmodulation, d. h. ein zweiter Chirp notwendig ist, der hier wie dargestellt von der höheren Frequenz f1 wieder zur Grundfrequenz f0 erfolgt. Dadurch ergibt sich in der Praxis eine in etwa doppelte Messdauer für die Erfassung und Detektion der Entfernung und der Geschwindigkeit.

Für den Fall, dass zwei oder mehrere Objekte existieren, können diese dennoch in einer Messreihe erfasst werden, sofern die Objekte im Bereich der zu den Schaltfrequenzen korrespondierenden Entfernungen angeordnet sind. Der Vorteil dieses Verfahrens ist, dass mehrere sich überlagernde Schwebungsfrequenzen, beispielsweise durch zwei oder mehrere Objekte in unterschiedlichen Entfernungen dennoch in einer Messreihe detektiert werden können.

Durch weitere Durchläufe mit unterschiedlichen Zeiten können auch bei mehreren statischen oder beweglichen Objekten auf diese Weise schnell Informationen über Entfernung und Relativgeschwindigkeit ermittelt werden. Hintergrund dafür ist, dass es im Allgemeinen nur schwer möglich ist, bei jeweils zwei gemessenen Differenzfrequenzen die korrekte Zuordnung der Frequenzen zu den Objekten zu bestimmen. So können beispielsweise gleiche Differenzfrequenzen bei unterschiedlichen Frequenzrampen auf zwei statische Objekte hindeuten. Allerdings erhält man auch das gleiche Ergebnis, wenn sich die Objekte in gleicher Entfernung aber mit entgegengesetzten Relativgeschwindigkeiten bewegen. Dies macht weitere Frequenzrampen mit einer unterschiedlichen Messzeit erforderlich, wenn Systeme auf reiner Frequenzmodulation verwendet werden.

Figur 2A zeigt eine schematische Darstellung einer optischen Messvorrichtung nach dem vorgeschlagenen Prinzip. Die optische Messvorrichtung umfasst eine Laservorrichtung 10, die zur Erzeugung und Abgabe eines in seiner Frequenz modulierbaren Einzelmoden Laserstrahls ausgebildet ist. Die Linienbreite des Lasers selbst liegt im Bereich einiger 10 kHz oder auch darunter, sollte aber deutlich kleiner als 1 MHz sein. Die Laservorrichtung 10 ist insbesondere als Halbleiterlaser beispielsweise als kantenemittierender oder vertikal emittierender Halbleiterlaser ausgebildet. Diese erlauben es, kontinuierliches Laserlicht zu erzeugen, dessen Ausgangsfrequenz zudem in einer gewissen Bandbreite einstellbar ist. Dies ist entweder durch den Aufbau der Laservorrichtung selbst realisiert, kann aber auch durch eine vorgeschaltete Optik beispielsweise in Form eines optischen Modulators, von photonischen Strukturen oder auch auf elektronischem Weg erfolgen. Zudem ist es möglich, das abgegebene Laserlicht durch weitere mechanische, optische oder elektronische Maßnahmen leicht abzulenken und so eventuell in unterschiedliche Raumrichtungen zu leiten.

Im Strahlengang der Laservorrichtung 10 ist nun ein Strahlteiler 50 angeordnet, der einen Teil des frequenzmodulierten und von der Laservorrichtung 10 abgegebenen Laserlichts auf einen Detektor 20 ableitet. Der Detektor 20 kann wie die Laservorrichtung 10 auf einem gleichen Substrat aufgebaut sein, sodass sich die optische Messvorrichtung besonders platzsparend und klein realisieren lässt.

Der Strahlteiler 50 ist halb durchlässig, sodass der größere Anteil des von der Laservorrichtung 10 abgegebenen Lichts im Strahlengang einem optischen Isolator 40 zugeführt wird. Der optische Isolator 40 lässt das von der Laservorrichtung kommende und vom Strahlteiler 50 durchgelassene Laserlicht ebenfalls durch bzw. gibt es an die Optikvorrichtung 60 bzw. Optik 66 weiter. Aufgrund einer möglichen Reflektion nahe an der Optik, oder auch durch andere Partikel, z.B. Verschmutzung und ähnliches kann ein Teil des Lichtes wieder in Richtung auf die Laservorrichtung 10 zurückgestrahlt werden, sodass hierfür der optische Isolator vorgesehen ist. Dieser unterdrückt ein unterwünschtes reflektiertes Licht (von dem Objekt 70 oder anderen Effekten), sodass der zurückreflektierte Anteil nicht in die Laservorrichtung 10 fällt und dort zu einer nicht gewünschten Intensitätsänderung führen kann. Alternativ kann auch der Strahlteiler 50 diese Funktion übernehmen, sodass der rückreflektierte Anteil in die Vorrichtung vernachlässigbar ist.

Der im Strahlteiler weitergereichte Anteil beträgt im Ausführungsbeispiel mehr als 90% und kann insbesondere im Bereich von 95% bis 99% liegen. Insofern wird nur ein kleiner Anteil vom Strahlteiler herausgeteilt und auf den Detektor geleitet. Dennoch sind die Verluste auf dem Messpfad oftmals noch größer, so dass selbst ein möglicher reflektierter Anteil noch geringer sein kann. Die Leistung in diesem sogenannten Lokaloszillatorsignal (dem rückgeführten Anteil) führt effektiv zu einer Verstärkung des empfangenen reflektierten Signals. Sie ist in der Praxis vor allem durch den linearen Detektionsbereich des verwendeten Detektors begrenzt, der nicht in die Sättigung getrieben werden sollte.

Die hier dargestellte Laservorrichtung 10 umfasst neben einem linearen frequenzmodulierbaren Einzelmoden Laser auch noch ein zusätzliches als Lokaloszillator für die Vorrichtung 10 arbeitendes Bauelement. Dieses umfasst eine Verzögerungsstrecke und dient zur Steuerung, zur Kontrolle und Justage der Linearität der Frequenzmodulation des von der Laservorrichtung 10 abgegebenen Signals.

Im Ausgang des optischen Isolators 40 ist nun eine Optikanordnung 60 vorgesehen, die einen oder mehrere Linsen, Spiegel oder andere optische Elemente aufweist. In der hier dargestellten Ausführungsform umfasst die Optik 60 einen oder mehrere Spiegel 66, die das Laserlicht steuerbar auf das in einer Entfernung von der optischen Messvorrichtung liegende Objekt 70 lenken. Hierzu können beispielsweise MEMS oder andere Spiegel eingesetzt sein, sodass mit der Optikvorrichtung und einem kontinuierlichen Betrieb ein Abtasten bzw. Abscannen eines von der optischen Messvorrichtung zu überwachenden Bereichs möglich ist. In anderen Aspekten ist die Abstrahloptik fixiert und eine Strahllenkung wird auf nicht mechanischem Wege erreicht. Ein solcher Ansatz ist im Regelfall deutlich schneller als mechanische Spiegel, zumal während der Spiegelbewegung keine Messung und auch keine Frequenzrampe durchgeführt werden kann.

Die optische Messvorrichtung umfasst neben Linsen und Spiegeln 66 für die Ausgangsseite auch noch entsprechende Linsensysteme 65 für ein von dem Objekt 70 zurückreflektierten Lichtanteil. Dieser fällt in die Optikanordnung 60 und wird dann auf den Messbereich der Detektorvorrichtung 20 gelenkt. Die Detektorvorrichtung 20 ist wiederum mit einer Steuer- und Auslesevorrichtung 80 verbunden.

Die Detektorvorrichtung 20 kann optische Filter (hier nicht dargestellt) besitzen, um einen nicht umgesetzten Anteil des Laserlichtes herauszufiltern. Ebenso können Filter für den sichtbaren Bereich oder andere Bereiche vorgesehen sein, so dass die Sensitivität der Detektorvorrichtung 20 erhöht wird. Die Detektorvorrichtung 20 umfasst einen oder mehrere Halbleiterdetektoren. Im Fall mehrere Halbleiterdetektoren sind diese beispielsweise in Reihen und oder auch Reihen und Spalten angeordnet, so dass die Detektorvorrichtung 20 ein 2-dimensionales Detektorarray bildet. Je nach Ausgestaltung und Form des Laserlichtes können so mehrere Detektoren reflektiertes Licht empfangen, dass vom gleichen Punkt des Objektes stammt. Dies vereinfacht eine spätere Messreihe, so dass das Signal mehrerer Detektoren gleichzeitig in einem Frequenzdurchlauf ausgewertet werden kann.

Figur 2B zeigt dem gegenüber eine leicht anders ausgestaltete Messvorrichtung. Bei dieser ist die Laservorrichtung 10' zur Abgabe eines Laserlichts mit im wesentlichen fester Frequenz ausgeführt. Eine Änderung der Frequenz erfolgt in einem optischen Modulator 30', dem ebenfalls ein optischer Isolator 40 vorgeschaltet ist. Der Modulator 30' ist als elektrooptischer Phasenmodulator ausgeführt, der eine steuerbare Frequenzmodulation des eingestrahlten Laserlichts bewirkt.

Bei der Verwendung eines elektrooptischen Modulators, der eine Frequenzmodulation des eingestrahlten Laserlichts erzeugt, ist nach dem vorgeschlagenen Prinzip zusätzlich ein optischer Isolator 40 im Strahlengang zwischen der Laservorrichtung 10' und dem Modulator 30' zweckmäßig. Der optische Isolator 40 lässt das von der Laservorrichtung kommende Laserlicht durch bzw. gibt es an den Modulator 30' weiter. Aufgrund der Modulation kann jedoch ein Teil des Lichtes wieder in Richtung auf die Laservorrichtung 10' zurückgestrahlt werden, sodass hierfür der optische Isolator vorgesehen ist. Dieser unterdrückt das vom Modulator 30' reflektierte Licht, sodass der zurückreflektierte Anteil nicht in die Laservorrichtung fällt und dort zu einer nicht gewünschten Intensitätsänderung führen kann. Alternativ kann auch der Strahlteiler 50 diese Funktion übernehmen, sodass der rückreflektierte Anteil in die Vorrichtung vernachlässigbar ist.

In einer alternativen Ausgestaltung ist die Linienbandbreite dieses Laserlichts größer und kann im Bereich der gewünschten Frequenzbandbreite liegen, die später durch das Schwebungssignal maximal realisierbar ist. Der Modulator 30 ist in einem solchen Fall beispielsweise dazu ausgeführt, einen schmalbandigen Anteil hier herauszufiltern und diesen über die Zeitdauer zu verändern, so dass auch hier das Laserlicht durchgestimmt wird. Allerdings ist hier mit einer eventuell höheren Verlustleistung zu rechnen. In beiden Ausgestaltungen ist der Strahlteiler 50 nach dem Modulator 30 angeordnet und reflektiert einen Teil des frequenzmodulierten Laserlichts wieder zurück in den Detektor.

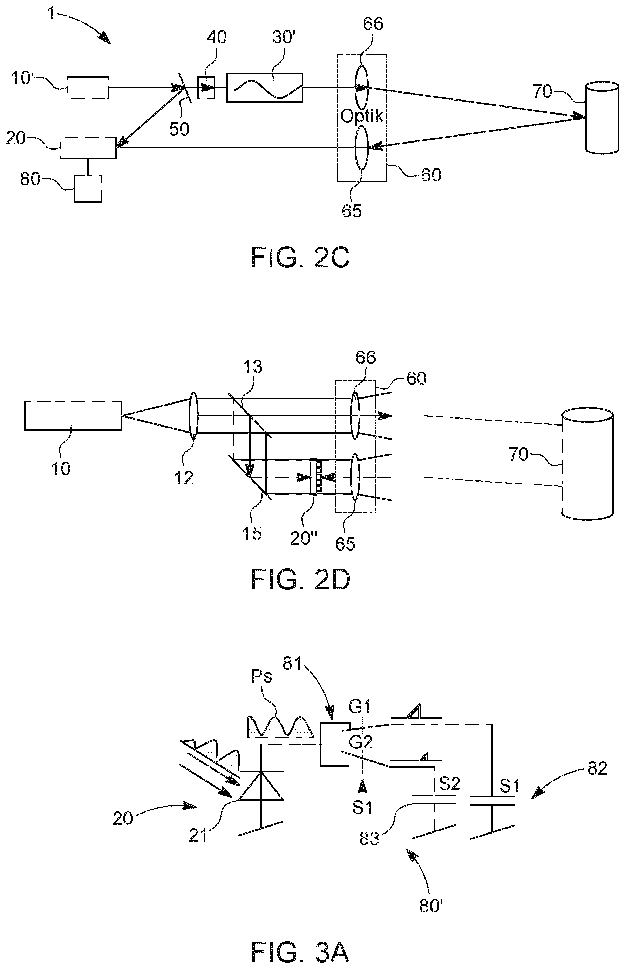

Figur 2C zeigt eine weitere alternative Ausführungsform. Bei diesem ist der Strahlteiler 50 zwischen Laservorrichtung 10 und Modulator 30' angeordnet. Die Laservorrichtung 10 ist wiederum ausgeführt ein Laserlicht mit einer festen Frequenz zu erzeugen. Dadurch gelangt im Gegensatz zu den bisherigen Lösungen nicht ein in seiner Frequenz veränderlicher Anteil als Lokaloszillatorsignal zurück in den Detektor, sondern das Lokaloszillatorsignal am Detektoreingang hat eine feste Frequenz. Dennoch ergibt sich im Detektor eine Überlagerung aus beiden Anteilen und damit eine Schwebung, deren Frequenz wiederum zur Entfernung korrespondiert. Allerdings variiert die Schwebungsfrequenz während des Frequenzdurchlaufs, was die Messung deutlich erschwert und bei der Auswertung berücksichtigt werden muss.

In den bisherigen Ausführungsformen fällt der abgezweigte Lichtanteil sowie der reflektierte Anteil des Lichts jeweils von einer Seite auf die Detektorfläche. Auf dieser Fläche lassen sich nun in einem zweidimensionalen Array die einzelnen Detektoren und lichtsensitiven Flächen anordnen. Die Auswerteschaltung und Ausleseeinheit 80 kann in diesen Ausführungsformen auf der Rückseite der Fläche angeordnet sein. Bei derartigen Anordnungen werden meist teildurchlässige Spiegelsysteme verwendet, um sicherzustellen, dass der abgezweigte Teil sowie der zurückreflektierte Teil möglichst parallel auf die Detektorfläche gelangt. Eine Mischung der beiden Signale erfolgt schon vor der Detektorfläche, beispielsweise in oder an den gemeinsamen verwendeten Spiegeln

In einer weiteren Optikvariante kann anstelle der separaten Sende- und Empfangsoptiken eine gemeinsame Optik verwendet werden. Dann wird das empfangene Signal durch einen optischen Zirkulator oder durch einen polarisationsabhängigen Strahlteiler vom gesendeten Signal getrennt.

Figur 2D zeigt demgegenüber eine Lösung, bei dem die Laservorrichtung 10 zur Abgabe eines frequenzmodulierten Laserlichts ausgestaltet ist. Dieses Licht wird von der Optik 12 kollimiert und anschließend an einen teiltransparenten Spiegel 13 geführt, der einen geringen Teil des Laserlichts abzweigt. Der weitaus größere Anteil des Laserlichts wird vom Spiegel 13 durchgelassen und von einem optischen System 60 auf das Objekt 70 in einer Entfernung zur Messvorrichtung gelenkt. Dort wird ein Teil reflektiert und gelangt über einen weiteren Teil des optischen Systems in den Detektor 20".

Der abgezweigte Teil des Laserlichts aber wird vom Spiegel 13 über einen weiteren Spiegel 15 abgelenkt und gelangt so von hinten, bzw. zumindest von einer anderen Seite her als der zurückreflektierte Teil in den Detektor und die Detektorfläche. Bei einer geeigneten Ausgestaltung des Detektors, z.B. einer gewissen Transparenz für den abgezweigten Teil des Laserlichts erfolgt eine Mischung der beiden Signale somit direkt auf der Detektorfläche, d.h. bei Fotodioden in der aktiven Zone der Fotodiode. Die Dicke der aktiven Schicht innerhalb der Detektorfläche sollte dabei kleiner als die Wellenlänge der Mischfrequenz sein. die Strahllenkung und der Aufbau einer derartigen gegenläufigen Optik mag etwas einfacher sein als bei gleichläufigen Detektorsystemen.

Die Figur 3A zeigt eine Ausgestaltungsform der Detektoranordnung 20, die an die Steuer- und Auslesevorrichtung 80' angeschlossen ist. Der Einfachheit halber werden verschiedene Aspekte, die sich mit der Koordinierung bzw. Filterung des einfallenden Lichtes in die Detektoranordnung 20 beschäftigen, hier nicht im Detail erläutert. Diese sind im Allgemeinen aus dem Stand der Technik bekannt und oftmals unabhängig von der Auswertung des Signals. Wesentlich ist hierbei lediglich, dass die Maßnahmen die Schwebungsfrequenz und auch die Amplitude nicht negativ beeinflussen, sondern vielmehr das Signal/Rauschverhältnis verbessern.

Die Detektoranordnung umfasst einen Halbleiterdetektor 21, der beispielsweise als lichtempfindliche Fotodiode ausgebildet ist. Eine derartige Fotodiode umfasst einen Schichtenstapel aus verschieden dotierten Halbleiterschichten (z.B. p- und n-dotiert) mit einer darin angeordneten aktiven Zone. Einfallendes Licht wird in dieser aktiven Zone absorbiert und in Elektronen-Loch Paare umgewandelt, die aufgrund eines entweder internen oder extern angelegten elektrischen Feldes räumlich getrennt werden und somit zu einem Fotostrom am Ausgang der Diode führen. Die Amplitude oder Intensität des Fotostroms ist je nach Ausbildung der Diode linear oder verläuft zumindest ein einem Bereich hiervon annähernd linear. Andere Abhängigkeiten sind denkbar, es ist allerdings zweckmäßig eine Linearität zu besitzen, da so vom Fotostrom auf die Intensität des reflektierten Lichts besonders einfach rückgeschlossen werden kann. Die Fläche einer einzelnen Fotodiode sollte möglichst klein sein, um eine monomodige Detektion zu gewährleisten. Kantenlängen von etwas unter 10 µm bis zu 20 - 30 µm erscheinen sinnvoll, sofern mit einer Wellenlänge im Bereich von 800 - 1600 nm gearbeitet wird, da auf diese Weise sich aus 2 dimensionale Detektorarrays mit mehreren in Zeilen und Spalten angeordnete Fotodioden realisieren lassen.

Bei relativ geringen Frequenzen, wie dies in dem vorliegenden Anwendungsbeispiel für die Schwebefrequenzen im Bereich von 20 MHz bis ca. 200 MHz der Fall ist, wird von der Fotodiode 21 ein zeitliche verändernder, d.h. mit der Schwebungsfrequenz modulierter Fotostrom bereitgestellt. Die Frequenz dieses Fotostroms PS entspricht somit der einfallenden Schwebungsfrequenz, wobei die Amplitude des Signals PS zwischen einem Minimalwert und einem Maximalwert periodisch schwankt. Dies ist in der Teilfigur 3A durch das einfallende Licht und den daraus resultierenden Fotostrom dargestellt.

An den Ausgang der Fotodiode ist nun ein Schalter 81 angeschlossen, der ausgangsseitig mit zwei Ladungsspeichern 82 und 83 verbunden ist. Die in den Ladungsspeichern 82 und 83 gespeicherte Ladung kann von einer entsprechenden mit diesen Ladungsspeichern gekoppelten Ausleseeinheit ausgelesen werden. Der Schalter 81 wiederum wird durch das Steuer- oder Schaltsignal S1 mit einer bestimmten Schaltfrequenz beaufschlagt und verbindet so zyklisch abwechselnd den Ausgang der Fotodiode 21 mit einem der beiden Ladungsspeichern 82 bzw. 83. Abhängig von der jeweiligen Schalterstellung durch das Schaltsignal S1 speichert somit eine der beiden Ladungsspeicher jeweils einen Ladungsanteil LS1 bzw. LS2, welche im Wesentlichen proportional zur Amplitude des Fotostroms von der Fotodiode 21 sind, während der der Schalter den jeweiligen Ladungsspeicher mit der Fotodiode verbindet.

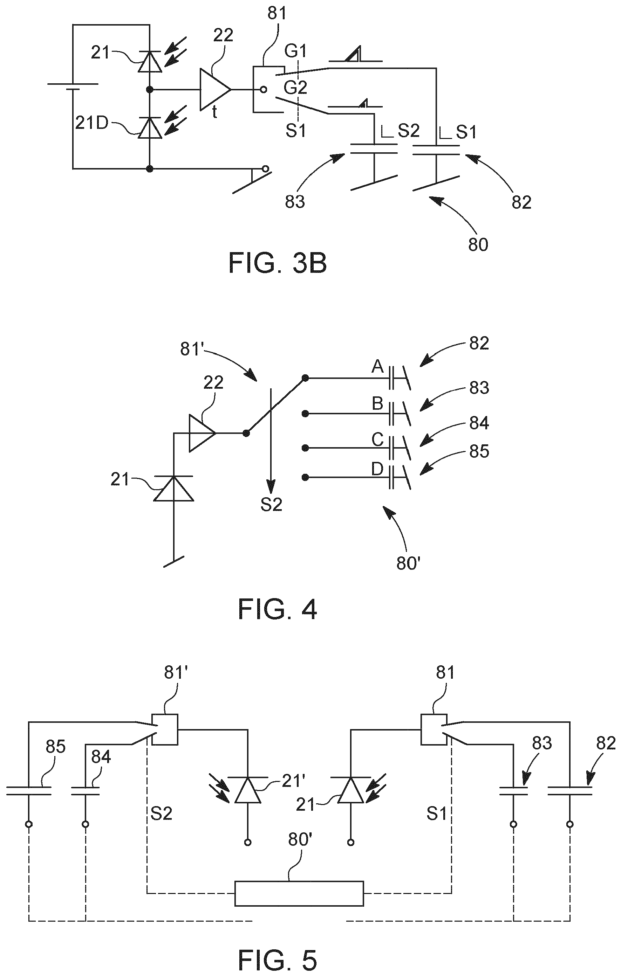

Die Figur 3B zeigt diesbezüglich eine verbesserte Darstellung in Form eines differenziell ausgebildeten Detektors mit zwei Fotodioden 21 und 21D. Die beiden Fotodioden sind dabei eng zueinander angeordnet, sodass das einfallende Licht im Wesentlichen gleichmäßig auf beide Fotodioden 21 und 21D fällt. Die Fotodioden sind in Reihe geschaltet. Zwischen den beiden Fotodioden, ist ein Knoten angeordnet, der zu einem Transimpedanzverstärker 22 führt, der ausgangsseitig wiederum an die Schalterstellung 81 angeschlossen ist. Die weiteren Elemente der auserwählte Einrichtung 80 entsprechend den Elementen in der Figur 3A.

Eine derartige Anordnung ist von Vorteil, wenn das zu messende optische Signal einen erheblichen konstanten Hintergrund aufweist. Dies ist üblicherweise der Fall, da das abgezweigte Lokaloszillatorsignal im Vergleich zudem von dem Messobjekt reflektierten Signal eine deutlich größere Amplitude aufweist. Zwar lässt sich in diesem Frequenzbereich die Fotodiode mit einem entsprechenden Filter ausstatten, dennoch bleiben Signalanteile übrig, die sich nicht aus dem Schwebungssignal, sondern aus anderen Effekten ergeben. Zum anderen kann ein größerer Lokaloszillator auch zu einer zusätzlichen Verstärkung des reflektierten Lichtanteils führen und somit in einigen Anwendungen durchaus gewünscht sein.

Bei einer Messung mit einer einzelnen Fotodiode wie in Figur 3A werden, so die beiden Ladungsspeichern 82 und 83 mit einem Fotostrom beaufschlagt, der neben dem Messsignal auch einen relativ großen Beitrag aus nicht erwünschten Signalbestandteilen enthält. Daraus ergibt sich, dass die beiden Ladungsspeicher im Vergleich zu den eigentlichen Ladungen, die aus dem Fotostrom des Schwebungssignals stammen, eine relativ große Gesamtladung akkumulieren. Bei einem hohen konstanten Hintergrund ergibt sich somit ein erheblicher Rauschbeitrag, der die zu messenden Signalanteile überlagern kann. Daher ist eine entsprechende Unterdrückung dieses konstanten Hintergrundes vorteilhaft, auch wenn dieser zumindest teilweise durch die spätere Signalverarbeitung noch herausgerechnet werden kann.

Die Figur 3B zeigt eine derartige Anordnung unter Verwendung von zwei Fotodioden in einem differenziell verschalteten Aufbau. Die Differenzielle Verschaltung reduziert Signalanteile aus Hintergrund erheblich, sodass der übrig gebliebene Anteil im Wesentlichen dem eigentlichen Messsignal, d. h. dem Schwebungssignal entspricht. Für eine Verbesserung des Signal/Rauschverhältnisses ist zudem ein differenzieller Verstärker 22 vorgesehen, der die Signale der beiden Fotodioden verstärkt und an ein der beiden durch die Schalterstellung 81 bestimmen Ladungsspeicher weiterreicht.

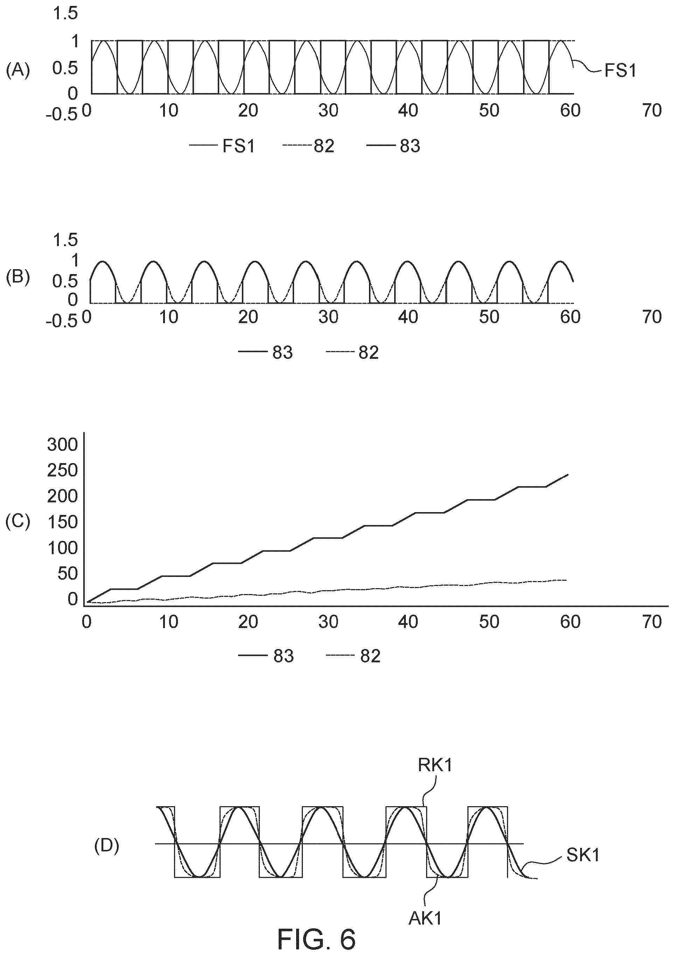

Die beiden Ausgestaltungsformen der Figuren 3A und 3B erlauben es, gemeinsam mit der Figur 6 das vorgeschlagene Prinzip in einer einfachen Weise zu erläutern. Die hier vorgestellte Lösung basiert auf einer diskreten Fouriertransformation, bei der sich die Frequenzkomponente eines Signals *x*(*ω*)*,* das mit *n* diskreten Werten aufgenommen wurde, bei der Frequenz w₀ beschreiben lässt. Insgesamt gilt die Formel: $x \left({ω}_{0}\right) = {\sum }_{n} x \left(ω\right) {e}^{- {iω}_{0} n} = {\sum }_{n} x \left(ω\right) cos {ω}_{0} n + i {\sum }_{n} x \left(ω\right) sin {ω}_{0} n$

Die Fouriertransformation im gesamten Spektrum, d.h. für alle interessanten Frequenzen w₀ ergibt sich aus einer Messreihe. Die Frequenz w₀ (im Folgenden wird w der Einfachheit halber als Frequenz definiert) entspricht dabei einer möglichen Schaltfrequenz und korrespondiert somit zu einem Objekt in einer bestimmten Entfernung.

Als einfaches Beispiel sei eine Schwebungssignal genannt, dass aus genau einer Frequenz besteht. Das zugehörige Fourierspektrum hat dann bei dieser Frequenz einen Anteil, bei allen anderen Frequenzen verschwinden die Frequenzkomponenten. Sofern diese Schwebungsfrequenz w der Frequenz w₀ entspricht, gibt die obige Formel dort einen Anteil und dies korrespondiert zu einer bestimmten Entfernung. Bei allen anderen Frequenzen ist der Beitrag 0.

Der Real- und Imaginärteil der oben gezeigten Fouriertransformation wird separat bestimmt, die Amplitude ergibt sich aus der Summe ihrer Betragsquadrate. Zu diesem Zweck werden die cos- und sin-Funktionen genähert durch Rechteckfunktionen angenähert, die sich in der Praxis durch eine einfache Verschaltung leicht realisieren lassen. Durch die in Schaltkreisen unvermeidlichen Zeitkonstanten der Schaltvorgänge sind die Rechteckfunktionen in der Realität nicht genau rechteckig, sondern verrundet, wodurch die ursprüngliche Sinus- und Kosinusfunktion noch besser angenähert werden.

Besonders vorteilhaft wäre eine Schaltung, bei der die Verrundung in Abhängigkeit von der Frequenz gezielt angepasst werden kann, um eine möglichst gute Näherung der Sinus- und Kosinusfunktion zu erreichen. Diese Näherung ist in Figur 6D gezeigt. Die durchgezogene Kurve SK1 ist die Sinus- oder Kosinusfunktion (je nach Zeitachse), die durchgezogene Linie RK1 ist die genäherte ideale Rechtecksfunktion des Schaltsignals, die gestrichelte Linie AK1 die reale Rechtecksfunktion inclusive des Einflusses der Zeitkonstanten der Schaltung.

Dieses Signal wird nun als Schaltsignal für die Ansteuerung der jeweiligen Schaltsignale für die Schalteinrichtungen in den Figuren 3A und 3B verwendet. Dadurch wird der Ausgang der Fotodiode abwechselnd und zyklisch mit der Frequenz w₀. mit (im ersten Beispiel) zwei Kapazitäten. Die Schaltung verschaltet den Detektorausgang abwechselnd mit der Frequenz w₀ mit (im Beispiel der Figuren 3A und 3B) zwei Kapazitäten. Nach dem Abschluss des über mehrere Perioden dauernden Messvorgangs wird die Differenz der Ladungen in den beiden Ladungsspeichern gebildet. Daraus ergibt sich näherungsweise je nach Phasenlage z.B. der Realteil der Fourierkomponente bei w₀.

In der Teilfigur 6A ist nun das Schwebungssignal FS1 des Fotostroms, d.h. das Schwebungssignal als durch gängige Sinusschwingung dargestellt, welches durch die Schalterstellung S1 zyklisch in einen der beiden Ladungsspeicher 82 bzw. 83 abgelegt wird. Da die Schaltfrequenz w₀ dargestellt durch das Rechtecksignal (durchgezogene Linie) für den Ladungsspeicher 83 bzw. das gestrichelte Rechtecksignal für den Ladungsspeicher 82 sowohl in Phase als auch in Frequenz gleiche dem Schwebungssignal ist, ergeben sich in der Teilfigur 6B bei jeder Periode Anteile des Fotostroms auf den Ladungsspeichern 82 und 83. Im Besonderen wird das einfallende Schwebungssignal, dargestellt durch das durchgängige sinusförmige Signal FS in Figur 6A durch das Schaltsignal S1 mit der Frequenz w₀ in gleichen Teilen periodisch zwischen den Ladungsspeichern 82 und 83 aufgeteilt. Der Detektor 83 ist dabei so verschaltet, dass er den Fotostrom im Bereich um die maximale Amplitude erfasst und daraus die Ladung akkumuliert, während der Detektor 82 lediglich die geringere Amplitude insbesondere auch den Nulldurchgang des Fotostroms FS erfasst und akkumuliert.

Entsprechend wird pro Periode auf dem Ladungsspeicher 82 eine deutlich geringere Ladung gespeichert als auf dem Ladungsspeicher 83. Dieser Effekt setzt sich auch über einen über mehrere Perioden dauernden Messvorgang fort, bei dem durch das Schaltsignal S1 die Ladungsspeicher zyklisch an die Fotodiode geschaltet werden.

In Figur 6C ist die entsprechende jeweils akkumulierte Ladung gezeigt. Mit einer zunehmenden Messdauer steigt die Differenz zwischen diesen akkumulierten Ladungen in den beiden Ladungsspeichern im Wesentlichen kontinuierlich und gleichförmig an. Die Differenz der beiden Ladungen entspricht somit der Amplitude des Fotostroms bei dieser Frequenz und stellt daher eine Fourierkomponente bei der Schaltfrequenz dar.

In dem vorliegenden Beispiel der Figur 6A ist das Schwebungssignal sowohl in der Phase als auch Frequenz gleich mit dem periodischen Wechsel der Schalterpositionen. Daher erfassen die beiden Ladungsspeicher diese Anteile proportional und die daraus resultierende Differenz ist gleich dem reinen Real- oder Imaginärteil und proportional zur Amplitude der Fourierkomponente des Schwebung Signals bei dieser Frequenz.

Die Teilfiguren 7A bis 7C zeigen analog zu den Figuren 6A bis 6C eine weitere simulierte Messung. Die Schaltfrequenz w₀ des Schaltsignals für die Ladungsspeicher ist die gleiche wie in dem Beispiel der Figur 6A, jedoch ist die Frequenz des Schwebungssignals größer und beträgt das 1.3 fache der Frequenz des Schwebungssignals der Figuren 6A bis 6C. auch hier wird nun der Fotostrom über mehrere Perioden zyklisch und gleichmäßig auf beide Ladungsspeicher verteilt. Aufgrund des Frequenzversatzes führt jedoch dazu, dass sich keine kontinuierlich ansteigende Differenz zwischen beiden gespeicherten Ladungen ergibt. Vielmehr liefert eine Differenzbildung der Ladungen der beiden im Wesentlichen den Wert 0. Dies entspricht mathematisch der Aussage das die oben genannte Summe (aus Realteil oder Imaginärteil) sich ebenfalls über die Anzahl der gemessenen Werte herausmittelt.

Entsprechend verschwindet die Fourierkomponente des Schwebungssignals bei der Frequenz w₀. Da die Schaltfrequenz w₀ zu einer Entfernung korrespondiert folgt daraus, dass sich in dieser Entfernung kein Objekt befindet.

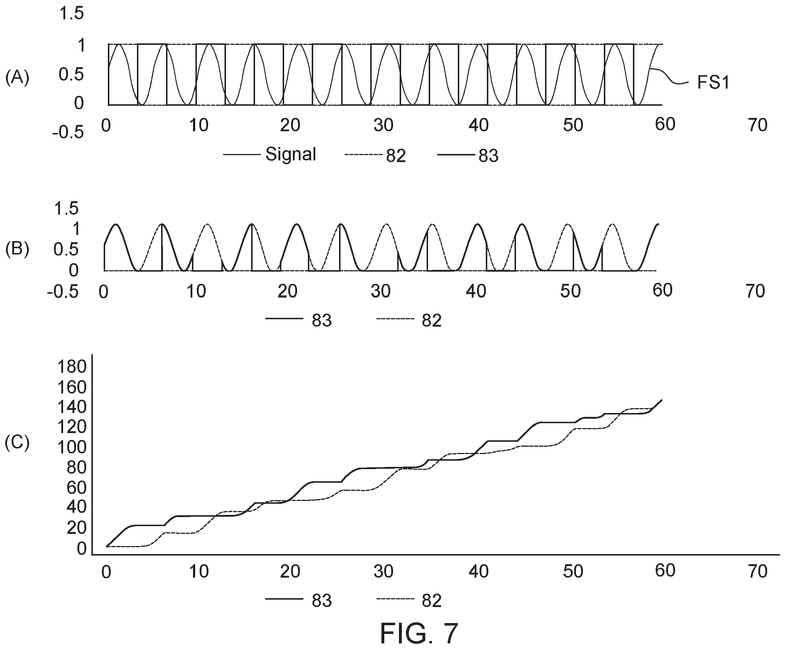

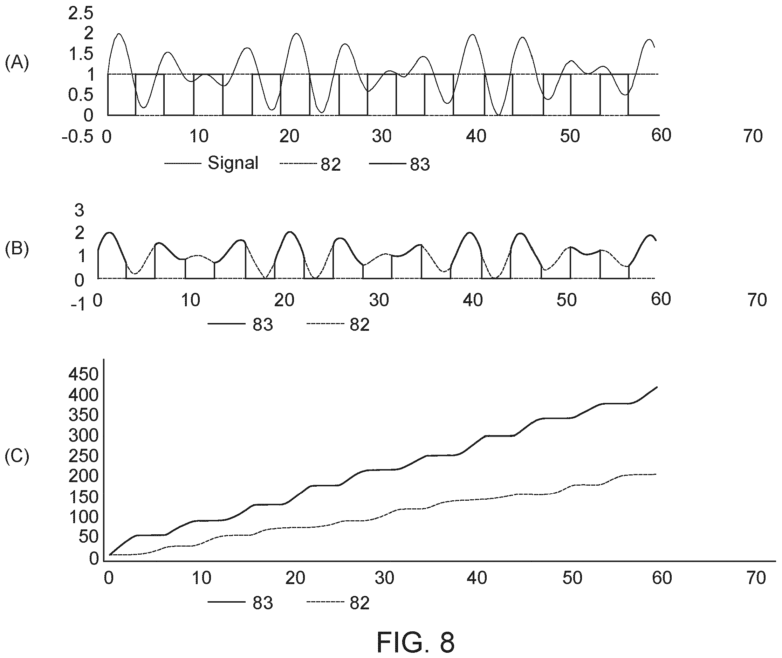

Figur 8 zeigt nun eine simulierte Messung mit identischer Schaltfrequenz w₀, jedoch mit einem gemischten Schwebungssignal, das der Summe der einfallenden Signale aus den Figuren 6 und 7 entspricht. Eine solche Überlagerung kann beispielsweise durch zwei Objekte in verschiedenen Entfernungen hervorgerufen sein. Durch die Messmethodik nach dem vorgeschlagenen Prinzip wird der Frequenzanteil des Schwebungssignals FS1 bei der Frequenz des Schaltsignals herausgefiltert, der sich von der Schaltfrequenz unterscheidet. Die Differenz der in den beiden Ladungsspeicher akkumulierten Ladungen über mehrere Perioden hinweg folgt somit dennoch dem Beispiel in Figur 6. Die Differenz der Ladungen in den Ladungsspeichern ist also ein quantitatives Maß für den Anteil der Schaltfrequenz im Schwebungssignal. Mit anderen Worten ist dieses Differenzsignal proportional zur entsprechenden Fourierkomponente bei der Schaltfrequenz.

In diesem Zusammenhang ist es zweckmäßig, wenn die Messdauer einer ganzzahligen Anzahl an Perioden der Schaltfrequenz entspricht, so dass die Akkumulationsdauern in beide Ladungsspeichern identisch sind, was einen Beitrag unterschiedlicher Akkumulationsdauer zum Differenzsignal vermeidet.

Im Regelfall ist die Phasenlage zwischen dem Schaltsignal und dem Schwebungssignal meist nicht gleich, wodurch sich selbst bei gleicher Frequenz eine Mischung aus Real- und Imaginärteil ergibt. Bei einer beliebigen Phasenlage hingegen muss eine solche Messung aufgrund des Imaginärteils der diskreten Fouriertransformation durch weitere Maßnahmen ergänzt werden, um dadurch die gemeinsame Amplitude zu ermitteln. Es ist also notwendig, in der Praxis nicht nur einen der beiden Teile, d.h. Real oder Imaginärteil, sondern beide Teile auszuwerten. Dies kann auf unterschiedliche Weise erfolgen, wobei das oben nur für einen Teil vorgestellte Prinzip aber erhalten bleibt.

In einer möglichen Ausgestaltung hierzu kann ein zweiter, unmittelbar benachbarter Detektor vorgesehen sein, der identisch verschaltet ist, bei dem jedoch der Wechsel zwischen den beiden Kapazitäten um eine Viertel Periode phasenverschoben getriggert wird. Dieser liefert dann den Imaginärteil. Nach der Betragsbildung liefert die Summe der beiden (oder ihrer Quadrate) ein Maß für die Amplitude der Frequenzkomponente bei w₀.

Figur 5 zeigt ein solches Ausführungsbeispiel in schematischer Ansicht. Bei diesem sind zwei Fotodioden 21 und 21' nahe beieinander angeordnet, sodass diese das reflektierte Lichtsignal vom gleichen Punkt des Objektes empfangen können. Jede der beiden Fotodioden 21 und 21' ist ausgangsseitig ihrerseits an eine Schaltvorrichtung 81 angeschlossen, welche jeweils zwei Ladungsspeicher 82 und 83 bzw. 84 und 85 zyklisch mit dem Ausgang der jeweiligen Fotodiode verbindet. Aufbau der beiden Elemente sind somit ähnlich oder sogar gleich dem Aufbau der Figur 3A. Jede der Dioden 21 und 21' kann auch durch einen differenziellen Detektor ersetzt werden.

Die Ansteuerung der beiden Schaltvorrichtungen 81 erfolgt über eine Steuer und Auslesevorrichtung 80' mit den Schaltsignalen S1 und S2. Die beiden Schaltsignale S1 und S2 weisen dabei die gleiche Frequenz auf, sind jedoch hinsichtlich ihrer Phase um jeweils ein Viertel der Periodendauer verschoben. Daraus ergibt sich eine Akkumulierung in den vier Ladungsspeichern, die wiederum bei einer geeigneten Differenzbildung durch die Steuer- und Auslesevorrichtung 80' entsprechend die Fourierkomponente des Signals bilden.

Ein weiteres Beispiel ist in Figur 4 dargestellt. Bei dieser ist die Fotodiode 21 über einen Transimpedanzverstärker 22 mit einer Schaltervorrichtung 81' verbunden. Dieser Schaltvorrichtung 81' wird mit einem Schaltersignal S2 angesteuert und schaltet dabei zyklisch bei je einem Viertel einer Periode des Schaltsignals S2 die Ladungsspeicher 82, 83, 84 und 85 auf den Ausgang des Impedanzverstärker 22. Mit anderen Worten ist die Schaltervorrichtung 81' so ausgebildet, dass sie die jeweiligen Ladungsspeicher zyklisch bei einem Viertel einer Periode mit dem Ausgang des Transimpedanzverstärker 22 verbindet, so dass diese einen von der Amplitude abhängigen Fotostrom als Ladungen akkumulieren.

Durch eine geeignete Differenzbildung der jeweiligen in den Ladungsträgern 82,83, 84 und 85 enthaltenen Ladungen kann sowohl der Imaginäranteil als auch der Realanteil einer Fourierkomponente bei der Frequenz w₀ des Fotostroms erfasst werden.

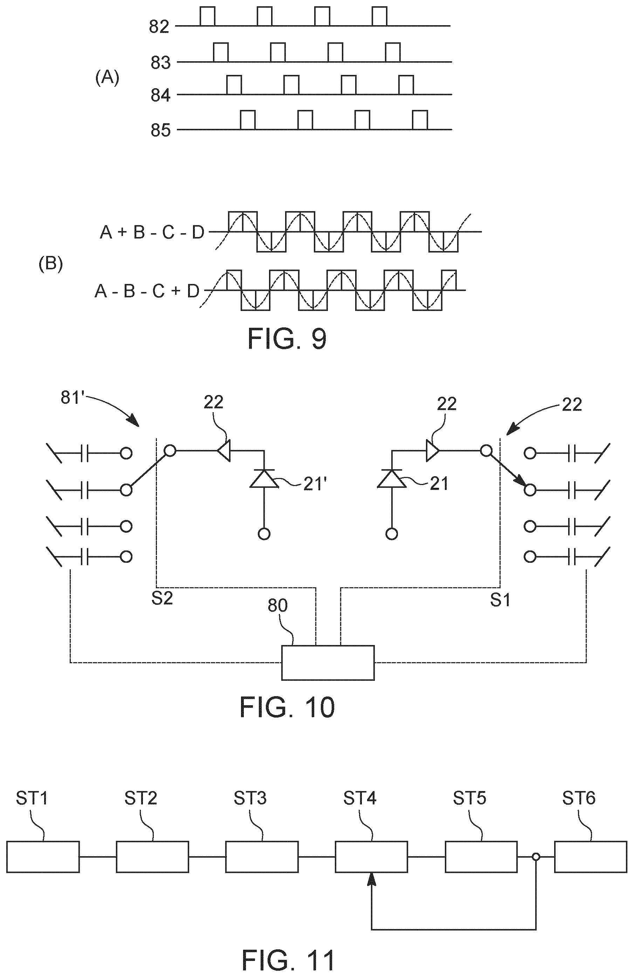

Figur 9 zeigt diesbezüglich ein Zeit-Signaldiagramm sowie beispielhaft eine Referenzbildung der einzelnen in den Ladungsspeichern akkumulierten Ladungen, um den Realteil bzw. Imaginärteil der Fourierkomponente zu ermitteln. Die Ansteuerung in Teilfigur 9A ist durch Pulse einer definierten Länge gegeben, welche ein zyklisches Verschalten der jeweiligen Ladungsspeicher anzeigt. Während eines jeden Pulses sind die jeweiligen Ladungsspeicher mit dem Ausgang der Fotodiode verbunden und speichern eine vom Fotostrom abhängige Ladung. Die Pulsdauer ist jeweils ein Viertel der Periodendauer des Schaltsignals. In dem vorgenannten Ausführungsbeispiel werden die Ladungen der Ladungsspeicher in der Reihenfolge ihrer mit den A, B, C und D bezeichnet.

Nach Ablauf des Messvorgang werden die akkumulierten Ladungen ausgelesen und es kann der Real- und Imaginärteil gebildet werden. Der Realteil der Fourierkomponente ergibt sich damit aus den Ladungsanteilen $A + B - C - D$

Das bedeutet, die gesamten Ladungen der Ladungsspeicher A und B entsprechen der Ladung S1 in den Figuren 3A bzw. 3B und die gesamten Ladungen C und D entsprechend der Ladung S2 in den Ausgestaltungen der Figuren 3A und 3B.

Der Imaginärteil der Fourierkomponente ist hingegen um ein Viertel der Periode verschoben und errechnet sich aus den Ladungen: $A - B - C + D$

Dies ist in der Teilfigur 9B auch mit jeweils genäherten Sinus- und Kosinusfunktionen als Gewichtungsfunktion bei der Fourier Transformation gezeigt. Die so ermittelten realen Imaginärteile des Fotostroms entsprechend der jeweiligen Fourierkomponente bei dieser Schaltfrequenz und können weiterverarbeitet werden.

Neben dieser Ausgestaltung der Figur 4, d. h. mit vier Ladungsspeichern ausgebildete auserwählte Einheit 80' lässt sich mit nur einer Fotodiode und dessen erzeugten Fotostrom sowohl der Realteil als auch der Imaginärteil einer Fourierkomponente ermitteln. Nachteil ist hierbei der notwendige Transimpedanzverstärker, da die eventuell akkumulierten Ladungen sehr gering sind und so größere Fehler aufgrund von unerwünschten Signalanteilen entstehen können. Eine Verbesserung ist, der in Figur 3B dargestellte differenzielle Detektor oder auch eine Anordnung, wie sie in der Darstellung der Figur 5 angedeutet ist.

Das vorgeschlagene Prinzip mittels eines Abtastens des Schwebungssignals mittels verschiedener Schaltfrequenzen deren Fourierkomponenten zu bestimmen hat verschiedene Vorteile. Unter anderem erlaubt es beispielsweise durch Benutzung mehrerer nach dem vorgeschlagenen Prinzip verschalteter Detektoren eine Bestimmung mehrere Fourierkomponenten des Schwebungssignals gleichzeitig bestimmen zu können.

Figur 10 zeigt hierzu eine weitere Ausgestaltungsform nach dem vorgeschlagenen Prinzip, bei der die Detektoranordnung als ein zweidimensionales Detektorarray mit mehreren Detektoren in Zeilen und Spalten ausgebildet ist. Die dem Detektorarray vorgeschaltete Optik ist dabei so ausgeführt, dass sie jeweils einen Teilbereich mit einigen Zeilen und Spalten gleichzeitig bestrahlen kann. Die einzelnen Detektoren 21 und 21' in diesem Detektorarray sind jeweils über einen Transimpedanzverstärker mit mehreren Ladungsspeichern verbunden, deren Ansteuerung über die Schaltvorrichtung mit den Schaltsignalen S1 und S2 erfolgt. Für eine Messung der jeweiligen Fourierkomponente nach dem vorgeschlagenen Prinzip werden nun die Schaltsignale S1 und S2 mit unterschiedlichen Schaltfrequenzen aktiviert, sodass die den jeweiligen Fotodioden 21 und 21' zugeordneten Ladungsspeichern mit unterschiedlichen Frequenzen zyklisch einen Anteil des jeweiligen von den Fotodioden 21, Strich abgegebenen Fotostroms erfassen. Dadurch wird auf dieser Weise bei einer einzelnen Messung, d. h. einer Frequenzrampe des abgegebenen Laserlichts zwei Fourierkomponenten eines möglichen Schwebungssignals ermittelt. Die Anzahl der notwendigen Messungen, d. h. der Frequenzdurchläufe, um eine Messreihe auf diese Weise zu erzeugen, wird dadurch reduziert.

In einer Abwandlung der Figur 10 lässt sich ein Detektor sowie ein Verstärker einsparen, so dass das Signal zwischen dem Verstärker und den Schalter 81 und 81' aufgeteilt wird. Allerdings sind in einem Solchen Fall die beiden Schalter nicht direkt mit dem Ausgang des Verstärkers 22 verbunden, sondern, es zwischen jeden Schalter und dem Ausgang des Verstärkers 22 jeweils eine Diode geschaltet, deren Kathoden mit dem jeweiligen Schalter 81 oder 81' verbunden ist. Auf diese Weise ist sichergestellt, dass Ladungen nicht von einem Speicher zum anderen fließen können.

Die Art und Weise der Detektion des Schwebungssignals hat den Vorteil einer erheblichen Reduktion der Datenrate, die zum Auslesen des detektierten Signals erforderlich ist. Bei einem FMCW-Detektor nach Stand der Technik ist das empfangene Schwebungssignal zunächst zu digitalisieren, was eine vorausgehende analoge Verstärkung erfordert. Das digitalisierte Signal ist anschließend unter erheblichem Aufwand an Rechenleistung einer Fouriertransformation zu unterziehen. Schwebungssignale können hierbei oft Frequenzen von mehreren 100 MHz erreichen, was eine Bandbreite der Auslesung und Verarbeitung in der Größenordnung von einem GHz erfordert. Dies ist technisch in einem zweidimensionalen Detektorarray derzeit nicht für eine hohe Zahl an Arrayelementen parallel möglich, bzw. würde den Füll Faktor aufgrund des hohen Platzbedarfs für analoge Verstärkung und Digitalisierung in jedem Pixel inakzeptabel klein werden lassen.

Bei dem Detektionssystem nach dem vorgeschlagenen Prinzip ist während des Empfangs des Schwebungssignals keinerlei Datentransfer in Echtzeit erforderlich. Erst nach Ende der Messung muss das Messergebnis ausgelesen werden. Eine typische Messdauer beträgt wenige µs. Damit ist die Datenrate um 3-4 Größenordnungen reduziert.

Dies ermöglicht die synchrone Datenerfassung von vielen parallelen Detektorelementen und damit den Betrieb als zweidimensionales Array in hoher Auflösung, z.B. > 10 000 oder > 100 000 Pixel. Dabei kann ein Teil der Datenauswertung bereits im Detektorpixel selbst erfolgen, wodurch im besten Fall nur noch der Wert der Amplitude der gemessenen Fourierkomponente auszulesen ist. Jedoch ist auch eine Auslesung der i.d.R. insgesamt 4 Kapazitäten pro Pixel möglich, mit einer Berechnung der Fourierkomponente in einer externen Logik. In jedem Fall entfällt die rechenzeit- und energieintensive Berechnung der Fouriertransformation, was die externe Logikschaltung und damit auch die parallele Datenauswertung erheblich vereinfacht.

Bei einer räumlichen Auflösung, d.h. einem Erfassen eines Raumwinkels kann die Messfrequenz, d.h. die Frequenz der Durchschaltung zwischen den Kapazitäten, wird vorteilhaft zentral, d.h. für das gesamte Array, vorgegeben und über eine entsprechende Triggerleitung über den Chip verteilt. Eine Phasenverschiebung dieses Triggers durch die Signallaufzeit über den Chip spielt keine Rolle, da die Phase der Schwebung nicht ausgewertet wird. Des Weiteren ist diese Triggerfrequenz variabel einstellbar.

Die Figur 11 zeigt die Schritte einer Messung zur Bestimmung einer Fourierkomponente. Mehrere Messungen ergeben eine Messreiche, wobei nach jeder Messreihe ein Spektrum erfasst wird, dessen Bandbreite einem abgetasteten Raum vor der Messvorrichtung entspricht und dessen einzelnen Messpunkte zu der Entfernungsauflösung korrespondieren.

Eine Messung beginnt in Schritt ST1 mit der Aussendung eines kontinuierlichen Lichtsignals mit einer sich ändernden Frequenz durch die Laservorrichtung. Ein Teil des Lichts wird als Lokaloszillatorsignal abgezweigt, um für die spätere Mischung mit einem von einem Objekt reflektierten Anteil verwendet zu werden. In Schritt ST2 wird das ausgesandte Licht von einem Objekt reflektiert und in Schritt ST3 empfangen und mit dem zuvor abgezweigten lokalen Oszillatorsignal überlagert. Diese Überlagerung kann je nach Ausgestaltung durch bzw. in einer vorgelagerten Optik aber auch in einem Detektor selbst erfolgen.

Es ist zweckmäßig, wenn das Mischsignal monomodig ist, d.h. es wird mit einer im Wesentlichen konstanten Phase im Bereich der Fläche des Detektors (bzw. aller zum gleichen Pixel gehörenden Detektoren im Fall der Verwendung eines Systems mit zwei Detektoren für Real- und Imaginärteil oder / und im Fall von differentieller Detektion), auf den Detektor geführt. Eine solche monomodige Führung wird unter anderem eine geringe Pixelgröße des Einzeldetektors erleichtert, bei dem die Kantenlängen im Bereich weniger µm bis wenigen 10 µm liegt, sofern mit einer Wellenlänge im Bereich von 800 nm - 1600 nm gearbeitet wird.

Das bei der Mischung entstehende Schwebungssignal wird vom Detektor in einen periodisch mit der Schwebungsfrequenz variierenden Fotostrom umgewandelt. Der Fotostrom wird nun in Schritt S4 zyklisch mit einem Schaltsignal einer definierten Frequenz aufgeteilt und die jeweiligen Anteile gespeichert. Dieser Vorgang wird über mehrere Perioden wiederholt, so dass sich eine ausreichend große akkumulierte Ladung ergibt.

Bei einem Detektorarray mit mehreren Speichern kann das Schaltsignal für mehrere Detektoren des Arrays oder sogar für alle verwendet werden. Eine besondere Berücksichtigung der Laufzeitunterschiede zwischen den einzelnen Detektoren ist nicht notwendig, da lediglich eine zur Amplitude des Schwebungssignals abhängiges Signal gespeichert wird, das keine Phaseninformation mehr enthält.

Am Ende der Messung werden alle Speicher abgekoppelt, so dass ein weiterer Fotostrom keine Auswirkungen hat. Anschließend werden in Schritt ST5 die abgespeicherten Ladungen ausgelesen. Dies kann auf unterschiedliche Arten erfolgen, die sich im Integrationsgrad der anschließenden Auswertelogik im Detektorpixel selbst unterscheiden. Beispielsweise kann gleich in Schritt ST5 auch eine Differenzbildung der oben genannten Art erfolgen und das Ergebnis wird digitalisiert und in einem Speicher zur Weiterverarbeitung abgelegt. Alternativ ist es auch möglich die gespeicherten akkumulierten Signale zu digitalisieren und dann getrennt zu verarbeiten.

Das Ergebnis des Auslesens und der Datenauswertung ist in jedem Fall die Amplitude bzw. Intensität der Fourierkomponente des Schwebungssignals bei der Schaltfrequenz.

Die Prozedur wird nun erneut mit Schritt S4 bei einer anderen Schaltfrequenz sowie bei möglicherweise bewegten Messobjekten bei geänderter Steigung der Frequenzrampe wiederholt, bis der gesamte interessierende Frequenzbereich in den gewünschten Abständen mit der erforderlichen Zahl an Frequenzrampen abgetastet worden ist. Die erhaltenen Amplituden ergeben gemeinsam das gesamte Fourierspektrum im interessierenden Frequenzbereich. Die Gesamtzahl aller Einzelmessungen ergibt dann eine Messreihe. Aus dem Spektrum lässt sich in Schritt S6 die Entfernung zu dem detektierten Objekt bestimmen. Nach Abschluss einer kompletten Messreihe kann diese erneut gestartet, um ein weiteres, unabhängiges Bild zu erhalten.

In Anwendungen im LiDAR Bereich werden diese Messreihen periodisch wiederholt. Zudem ist es möglich bei identifizierten Objekten, diese nochmals genauer zu bestimmen und so weitere Informationen zu erhalten.

Das Ende der einzelnen Messung erfolgt spätestens mit dem Ende der von der Laservorrichtung erzeugten Frequenzrampe des Laserlichts. In diesem Fall wird pro Frequenzrampe eine Messung durchgeführt. Es ist aber auch möglich, während einer Frequenzrampe mehrere kürzere Einzelmessungen mit Schaltsignalen unterschiedlicher Frequenz durchzuführen. In diesem Fall werden die Schritte S4 oder S5 wiederholt.

Ebenso ist es möglich, die Messung bei Ende der Frequenzrampe nur zu unterbrechen und sie mit den nächsten Frequenzrampe fortzuführen. In letzterem Fall ist allerdings auf die korrekte Phasenlage zu achten.

Bei dem vorgeschlagenen Prinzip gilt aber auch weiterhin die aus der Fouriertransformation bekannte Eigenschaft, dass der kleinste messbare Frequenzunterschied $Δf = \frac{1}{T}$ ist, wobei T die Dauer der Messung ist.

Aus diesem Frequenzunterschied folgt die Entfernungs- oder Ortsauflösung. Wählt man eine hohe Auflösung, so sind einerseits mehr Stützstellen, d.h. Messungen bei verschiedenen Schaltfrequenzen durchzuführen, und andererseits muss eine größere Messdauer genutzt werden. Bei festem Frequenzbereich des Laserlichts und damit einem vorgegebenen Frequenzbereich der Schwebung geht die Auflösung damit quadratisch in die Gesamtdauer der Messung ein. Zu beachten ist, dass der Abstand der einzelnen Schaltfrequenzen untereinander höchstens der Auflösung entsprechen darf, da sonst Zwischenfrequenzen möglicherweise nicht detektiert werden können.

Beispielsweise liefert ein System mit einer Bandbreite der Frequenzmodulation von 1 GHz und einer Dauer der Frequenzrampe von 10 µs liefert für eine Entfernung von 200 m eine Schwebungsfrequenz von 134 MHz ohne Berücksichtigung eines eventuellen Dopplereffekts. Dies folgt aus der gesamten Distanz von 400m (Hin und Rücklauf) und der Lichtgeschwindigkeit: 400m / 3e8 m/s = ca. 1,34µs und damit für eine Frequenz: 1Ghz/10µs * 1,34µs = 134 MHz

Bei einer Frequenzauflösung von 0,1 MHz und somit einer Ortauflösung von ca. 30cm sind zur vollständigen Abdeckung des Entfernungsbereichs von 0 m bis 200 m mindestens 1340 Messungen erforderlich unter der Bedingung, dass eine Messung jeweils die 10µs dauert.

Damit beträgt die gesamte Messdauer einer Messreihe mindestens 13,4 ms. Sollen bewegte Objekte gemessen werden, so ist jeweils eine zweite Frequenzrampe mit einer anderen Frequenz erforderlich, was die Gesamtmessdauer auf 26,7 ms erhöht. Dies liefert in etwa 37 vollständige Messreihen pro Sekunde. Die meisten Entfernungsmesssysteme z.B. im Automobilbereich arbeiten heute mit einer Wiederholungsrate von 10 bis 30 Hz, d.h. mit einem System mit den angegebenen, durchaus sehr realistischen Parametern ließen sich diese Anforderungen erfüllen.

Eine höhere Auflösung erfordert längere Messzeiten und mehr Messfrequenzen und kann damit bei gleichem Entfernungs-/Frequenzbereich nur noch seltener wiederholt werden. Umgekehrt kann die Wiederholrate durch eine Verkürzung der Messdauer erheblich erhöht werden. Insbesondere kann durch eine erste Messung mit kurzer Messdauer eine ungenaue Entfernungsmessung durchgeführt werden, und im Anschluss kann der engere Entfernungs-/Frequenzbereich um ein detektiertes Signal herum durch verlängerte Messdauer feiner aufgelöst werden.

Der hier vorgestellte Ansatz eignet sich für Flash-FMCW-Messungen. Da für jede Entfernungsmessung mehrere Einzelmessungen nötig sind, wird insgesamt eine höhere Laserenergie benötigt als für eine konventionelle FMCW-Messung. Daher eignet sich das System vor allem für kurze bis mittlere Reichweiten (ca. 20-50 m) im Automobilbereich, wobei gerade in diesem näheren Umfeld hohe Orts- und Zeitauflösungen erreichbar sind. Größere Reichweiten bei gleichzeitig voller Entfernungsabdeckung sind aufgrund von Anforderungen an die Augensicherheit im Bereich Automotiv schwierig zu realisieren sind, lassen sich aber für Anwendungen implementieren, bei denen die Augensicherheit nur eine untergeordnete Rolle spielt. Vorteile gegenüber konventionellen Systemen liegen bei der relativen Unempfindlichkeit gegen Hintergrundlicht sowie der gleichzeitigen Messung der Relativgeschwindigkeit, was auch eine Objektidentifizierung erleichtert.

Da es mit diesem Systemansatz möglich ist, durch Einschränkung des zu messenden Entfernungs-/Frequenzbereichs die Gesamtmessdauer zu verkürzen oder die Genauigkeit zu erhöhen, ist das System auch attraktiv für Automatisierungs- und Robotikanwendungen, in denen eine schnelle Erfassung eines größeren Gesichtsfeldes bei bekanntem interessierendem Entfernungsbereich wichtig ist. Die gleichzeitige Messung der Relativgeschwindigkeit sowie die Unempfindlichkeit gegen Hintergrundlicht können hier eine schnelle Detektion von erwarteten Objekten auch in anderweitig schwer zugänglichen Umgebungen, wie heißen Öfen o.ä., ermöglichen, bei denen Time-of-Flight-Systeme Probleme haben.

### BEZUGSZEICHENLISTE

- 10, 10': Laservorrichtung
- 12: Kollimatorlinse
- 13, 15: Strahlteiler
- 20, 20": Detektorvorrichtung
- 21, 21': Detektor
- 21D: Detektor
- 22: Verstärker
- 30, 30': Modulator
- 40: optischer Isolator
- 50: Strahlteiler
- 60: optisches System
- 65, 66: Optiksystem, Linsen
- 70: Objekt
- 80, 80': Steuer- und Auslesevorrichtung
- 81, 81': Schaltvorrichtung
- 82, 83: Ladungsspeicher
- 84, 85: Ladungsspeicher

- FS1: Schwebungssignal
- LS1, LS2: Ladungsanteil
- S1, S2: Schaltsignale
- RK1, AK1: Signal
- SK1: Signal

## Patentansprüche

1. Optische Messvorrichtung zum Erfassen eines Objektes (70), welches sich in einem von der optischen Messvorrichtung erfassten Raum bis zu einer maximalen Distanz befindet, umfassend:
- eine Laservorrichtung (10) ausgebildet zur Abgabe eines in seiner Frequenz durchstimmbaren Laserstrahls, insbesondere eines Einzelmodenlaserstrahls
- einen Strahlteiler (13, 15, 50) ausgebildet, um einen Teil des von der Laservorrichtung im Betrieb abgegebenen Laserstrahls abzuzweigen;
- eine optische Vorrichtung ausgebildet, um den abgezweigten Teil mit einem Teil eines von dem Objekt (70) reflektierten Lichts zu überlagern;
- eine Detektorvorrichtung (20), die eingerichtet ist, das überlagerte Licht zu empfangen und ein davon abhängiges Signal zu erzeugen;
- **gekennzeichnet durch** eine Auswerteeinrichtung, die wenigstens zwei erste Ladungsspeicher (82, 83, 84, 85) zum Speichern einer zum Signal korrespondierenden Ladung aufweist, die in Antwort auf wenigstens zwei unterschiedliche Schaltfrequenzen aufweisende erste Schaltsignale über eine erste Schaltvorrichtung mit der Detektorvorrichtung zyklisch gekoppelt sind; die eine Ausleseeinheit aufweist, welche zum Auslesen und Differenzbildung der in den ersten Ladungsspeichern gespeicherten Ladung jeweils nach der abwechselnden Kopplung mit einem ersten der wenigstens zwei ersten Schaltsignale und nach der Kopplung mit einem zweiten der wenigstens zwei ersten Schaltsignale ausgebildet ist.

2. Optische Messvorrichtung nach Anspruch 1, bei welcher
- die Detektorvorrichtung zwei benachbarte Detektoren aufweist, von denen einer mit den wenigstens zwei ersten Ladungsspeichern gekoppelt ist und der andere der zwei benachbarten Detektoren über eine weitere erste Schaltvorrichtung mit zwei weiteren ersten Ladungsspeichern zyklisch gekoppelt; wobei jedes Schaltsignal für die weitere erste Schaltvorrichtung jeweils phasenverschoben, insbesondere um jeweils λ/4 phasenverschoben zu den wenigstens zwei ersten Schaltsignalen ist; oder bei welcher
- die Auswerteeinrichtung zwei weitere erste über die Schaltvorrichtung mit der Detektorvorrichtung abwechselnd gekoppelte Ladungsspeicher zum Speichern des Signals aufweist, derart, dass die vier Ladungsspeicher zyklisch pro Periode der ersten Schaltsignale mit der Detektorvorrichtung verschaltet sind.

3. Optische Messvorrichtung nach einem der vorherigen Ansprüche, bei der
- die Auswerteinrichtung wenigstens zwei zweite Ladungsspeicher zum Speichern einer zum Signal korrespondierenden Ladung aufweist, die in Antwort auf wenigstens zwei unterschiedliche Schaltfrequenzen aufweisende zweite Schaltsignale über eine zweite Schaltvorrichtung mit der Detektorvorrichtung zyklisch gekoppelt sind; und
- die Ausleseeinheit zum Auslesen und Differenzbildung der in den zweiten Ladungsspeichern gespeicherten Ladung jeweils nach der abwechselnden Kopplung mit einem ersten der wenigstens zwei zweiten Schaltsignale und nach der Kopplung mit einem zweiten der wenigstens zwei zweiten Schaltsignale ausgebildet ist.

4. Optische Messvorrichtung nach einem der vorherigen Ansprüche, bei der die Detektorvorrichtung als ein Array mit einer Vielzahl von Detektoren ausgebildet ist, wobei jeder der Vielzahl von Detektoren über je eine Schaltvorrichtung der Auswerteeinheit mit je wenigstens zwei Ladungsspeichern der Auswerteinheit zum Speichern einer zum Signal korrespondierenden Ladung in Antwort auf wenigstens zwei unterschiedliche Schaltfrequenzen aufweisende Schaltsignale über die jeweilige Schaltvorrichtung zyklisch gekoppelt ist.

5. Optische Messvorrichtung nach Anspruch 3 oder 4, bei der die Schaltfrequenzen der ersten Schaltsignale unterschiedlich sind zu den Schaltfrequenzen der zweiten Schaltsignale.

6. Optische Messvorrichtung nach einem der vorherigen Ansprüche, bei der die Detektoren der Detektorvorrichtung als differentielle Detektoren ausgebildet sind; und/oder
die Detektorvorrichtung einen Verstärker, insbesondere einen lownoise Transimpedanzverstärker umfasst, der zwischen der Schaltvorrichtung und den Detektoren angeordnet ist.

7. Optische Messvorrichtung nach einem der vorherigen Ansprüche, bei der die Schaltfrequenzen für die ersten und/oder zweiten Schaltsignale zu einem Abstand von der optischen Messvorrichtung korrespondieren, der sich aus einer Schwebung des abgezweigten Teils und eines von einem Objekt reflektierten Lichts in diesem Abstand ergeben würde.

8. Optische Messvorrichtung nach einem der vorherigen Ansprüche, bei welcher eine Zeitdauer des Durchstimmens des von der Laservorrichtung abgegebenen Laserstrahls größer ist, insbesondere um das doppelte oder mehr größer ist als eine Messdauer, bei der eines der ersten und/oder zweiten Schaltsignale anliegt.

9. Optische Messvorrichtung nach einem der vorherigen Ansprüche, bei der zwei benachbarte Schaltfrequenzen der wenigstens zwei ersten und/oder der wenigstens zwei zweiten Schaltsignale jeweils äquidistante Abstände aufweisen.

10. Optische Messvorrichtung nach einem der vorherigen Ansprüche, bei der
- die Auswerteinrichtung ausgebildet ist, während einer Zeitdauer des Durchstimmens des von der Laservorrichtung abgegebenen Laserstrahls wenigsten zwei erste und/oder zweite Schaltsignale zu erzeugen; und/oder
- die Auswerteeinrichtung ausgebildet ist, aus der Differenzbildung der in den ersten Ladungsspeichern gespeicherten Ladung einen Wert abzuleiten, der zu einer Fourierkomponente des überlagerten Lichts bei der Frequenz des Schaltsignals korrespondiert.

11. Optische Messvorrichtung nach einem der vorherigen Ansprüche, bei der die Laservorrichtung ausgebildet zur Abgabe eines in seiner Frequenz durchstimmbaren Laserstrahls
- ausgebildet ist, die Frequenz des Laserstrahls basierend auf einem Strom durch die Laservorrichtung zu verändern
- einen Laser mit einer festen Ausgangsfrequenz aufweist, dem ein optischer Modulator nachgeordnet ist.

12. Verfahren zur Bestimmung einer Entfernung wenigstens eines Objektes (70) von einem Referenzpunkt, umfassend:
- Erzeugen eines in seiner Frequenz durchstimmbaren kontinuierlichen Laserlichts während wenigstens zwei Frequenzdurchläufen, wobei sich in jedem Frequenzdurchlauf die Frequenz des Laserlichts stetig von einer ersten Frequenz zu einer zweiten Frequenz ändert;
- Abzweigen eines Teils des Laserlichts;
- Überlagern des abgezweigten Teils des Laserlichts mit einem von dem Objekt (70) zurückreflektierten Anteil des Laserlichts zum Erzeugen eines Schwebungssignals (FS1); und **gekennzeichnet durch**:
- Zyklisches Abtasten einer Amplitude des Schwebungssignals mit einer ersten Schaltfrequenz während eines ersten der wenigstens zwei Frequenzdurchläufe und mit einer zweiten Schaltfrequenz während eines zweiten der wenigstens zwei Frequenzdurchläufe, wobei für jede Periode der ersten und zweiten Schaltfrequenzen diese in zwei, insbesondere 4 gleich lange aufeinander folgende Abschnitte unterteilt wird, in denen die Amplitude des Schwebungssignals abgetastet und ein dazu korrespondierender Wert erzeugt wird, wobei ein zyklisches Abtasten jeweils für zumindest zwei Perioden der ersten und zweiten Schaltfrequenzen erfolgt;
- Ermitteln einer Fourierkomponente des Schwebungssignals bei der ersten Schaltfrequenz aus den gespeicherten Werten der Abschnitte der Periode der ersten Schaltfrequenz und einer Fourierkomponente des Schwebungssignals bei der zweiten Schaltfrequenz aus den gespeicherten Werten der Abschnitte der Periode der zweiten Schaltfrequenz.

13. Verfahren nach Anspruch 12, bei dem der Schritt des zyklischen Abtastens umfasst:
- Detektieren, oder auch optionales differentielles Detektieren der Amplitude des Schwebungssignals und umwandeln in einen Fotostrom;
- Optionales Verstärken des Fotostroms
- Speichern einer zu dem Fotostrom korrespondierenden Ladung während jedes Abschnittes;
wobei optional
während gleichen Abschnitten aufeinanderfolgender Perioden die zu dem Fotostrom korrespondierenden Ladungen zusammengefasst werden.

14. Verfahren nach einem der Ansprüche 12 bis 13, bei dem
- das zyklische Abtasten einer Amplitude des Schwebungssignals mit mehreren ersten unterschiedlichen Schaltfrequenzen während eines ersten der wenigstens zwei Frequenzdurchläufe und mit mehreren zweiten unterschiedlichen Schaltfrequenzen während eines zweiten der wenigstens zwei Frequenzdurchläufe erfolgt; und/oder
- das zyklische Abtasten jeweils für eine Periodenanzahl der ersten und zweiten Schaltfrequenzen erfolgt, die einer Abtastdauer zwischen 0,1 und 0,5 der Dauer eines Frequenzdurchlaufs entspricht; und/oder
- bei dem das zyklische Abtasten einer Amplitude des Schwebungssignals mit in zwei Abschnitten unterteilte Perioden der ersten und zweiten Schaltfrequenzen umfasst:
∘ Zyklisches Abtasten während des ersten der wenigstens zwei Frequenzdurchläufe mit der ersten Schaltfrequenz sowie einer weiteren ersten Schaltfrequenz, die zu der ersten Schaltfrequenz um ein Viertel der Periode phasenverschoben ist; und
∘ Zyklisches Abtasten während des zweiten der wenigstens zwei Frequenzdurchläufe mit der zweiten Schaltfrequenz sowie einer weiteren zweiten Schaltfrequenz, die zu der zweiten Schaltfrequenz um ein Viertel der Periode phasenverschoben ist.

15. Verfahren nach einem der Ansprüche 12 bis 14, bei dem der Schritt des Ermittelns umfasst:
- bei einer Unterteilung in zwei Abschnitte pro Periode:
∘ Bilden einer Differenz aus den gespeicherten Werten der jeweiligen Abschnitte der Periode der ersten und zweiten Schaltfrequenz zur Erzeugung eines aus Real- oder Imaginärteil der Fourierkomponente des Schwebungssignals der ersten und zweiten Schaltfrequenz;
- bei einer Unterteilung in vier Abschnitte pro Periode:
∘ Bilden einer Differenz aus den Summen des ersten und zweiten Abschnittes sowie des dritten und vierten Abschnittes zur Erzeugung eines Realteils der Fourierkomponente des Schwebungssignals der ersten und zweiten Schaltfrequenz; und
∘ Bilden einer Differenz aus den Summen des ersten und vierten Abschnittes sowie des zweiten und dritten Abschnittes zur Erzeugung eines Imaginärteils der Fourierkomponente des Schwebungssignals der ersten und zweiten Schaltfrequenz.

## Claims

1. An optical measuring device for detecting an object (70) located within a space detected by the optical measuring device up to a maximum distance, comprising:
- a laser device (10) configured to emit a frequency-tunable laser beam, in particular a single-mode laser beam
- a beam splitter (13, 15, 50) configured to split off a portion of the laser beam emitted by the laser device during operation;
- an optical device configured to superimpose the split portion with a portion of light reflected by the object (70);
- a detector device (20) configured to receive the superimposed light and generate a signal dependent thereon;
**characterized by**
- an evaluation unit comprising at least two first charge storage devices (82, 83, 84, 85) for storing a charge corresponding to the signal, which are cyclically coupled to the detector device via a first switching device in response to first switching signals having at least two different switching frequencies; which comprises a readout unit configured to read out and differentiate the charge stored in the first charge storage elements, in each case after alternating coupling with a first of the at least two first switching signals and after coupling with a second of the at least two first switching signals.

2. An optical measuring device according to claim 1, in which
- the detector device comprises two adjacent detectors, one of which is coupled to the at least two first charge storage elements, and the other of the two adjacent detectors is cyclically coupled to two further first charge storage elements via a further first switching device; wherein each switching signal for the further first switching device is phase-shifted by , in particular by λ/4, relative to each of the at least two first switching signals; or in which
- the evaluation device comprises two further first charge storage elements alternately coupled to the detector device via the switching device for storing the signal, such that the four charge storage elements are cyclically connected to the detector device per period of the first switching signals.

3. An optical measuring device according to one of the preceding claims, wherein
- the evaluation device comprises at least two second charge storage elements for storing a charge corresponding to the signal, which are cyclically coupled to the detector device via a second switching device in response to second switching signals having at least two different switching frequencies; and
- the readout unit is configured to read out and differentiate the charge stored in the second charge storage elements, in each case after alternating coupling with a first of the at least two second switching signals and after coupling with a second of the at least two second switching signals.

4. An optical measurement device according to one of the preceding claims, in which the detector device is configured as an array comprising a plurality of detectors, wherein each of the plurality of detectors is cyclically coupled via a respective switching device of the evaluation unit to at least two charge storage units of the evaluation unit for storing a charge corresponding to the signal in response to switching signals having at least two different switching frequencies via the respective switching device

5. An optical measuring device according to claim 3 or 4, in which the switching frequencies of the first switching signals differ from the switching frequencies of the second switching signals.

6. An optical measuring device according to any one of the preceding claims, in which the detectors of the detector device are configured as differential detectors; and/or
the detector device comprises an amplifier, in particular a low-noise transimpedance amplifier, which is arranged between the switching device and the detectors.

7. An optical measuring device according to any of the preceding claims, in which the switching frequencies for the first and/or second switching signals correspond to a distance from the optical measuring device that would result from a beat between the branched portion and light reflected from an object at that distance.

8. An optical measuring device according to any of the preceding claims, in which a duration of the tuning of the laser beam emitted by the laser device is greater-in particular, twice as long or longer-than a measurement duration during which one of the first and/or second switching signals is present.

9. An optical measuring device according to any of the preceding claims, in which two adjacent switching frequencies of the at least two first and/or the at least two second switching signals are equidistant from one another.

10. An optical measuring device according to one of the preceding claims, in which
- the evaluation device is configured to generate at least two first and/or second switching signals during a time period in which the laser beam emitted by the laser device is being tuned; and/or
- the evaluation device is configured to derive, from the difference between the charges stored in the first charge storage elements, a value that corresponds to a Fourier component of the superimposed light at the frequency of the switching signal.

11. An optical measuring device according to any of the preceding claims, in which the laser device is configured to emit a laser beam whose frequency is tunable
- , the frequency of the laser beam is varied based on a current through the laser device
- includes a laser with a fixed output frequency, downstream of which an optical modulator is arranged.

12. A method for determining the distance of at least one object (70) from a reference point, comprising:
- generating a frequency-tunable continuous laser light during at least two frequency sweeps, wherein in each frequency sweep the frequency of the laser light changes continuously from a first frequency to a second frequency;
- Splitting off a portion of the laser light
- Superimposing the diverted portion of the laser light with a portion of the laser light reflected back from the object (70) to generate a beat signal (FSI);
**characterized by**
- Cyclically sampling an amplitude of the beat signal at a first switching frequency during a first of the at least two frequency sweeps and at a second switching frequency during a second of the at least two frequency sweeps,
wherein, for each period of the first and second switching frequencies, said period is divided into two-in particular, four-consecutive segments of equal length, during which the amplitude of the beat signal is sampled and a corresponding value is generated, with cyclic sampling taking place for at least two periods of each of the first and second switching frequencies;
- determining a Fourier component of the beat signal at the first switching frequency from the stored values of the segments of the period of the first switching frequency and a Fourier component of the beat signal at the second switching frequency from the stored values of the segments of the period of the second switching frequency.

13. A method according to claim 12, wherein the step of cyclic sampling comprises:
- Detecting, or optionally differentially detecting, the amplitude of the beat signal and converting it into a photocurrent;
- Optionally amplifying the photocurrent;
- Storing a charge corresponding to the photocurrent during each segment;
wherein, optionally,
during the same intervals of successive periods, the charges corresponding to the photocurrent are summed.

14. A method according to any one of claims 12 through 13, in which
- the cyclic sampling of an amplitude of the beat signal is performed at a plurality of first different switching frequencies during a first of the at least two frequency sweeps and at a plurality of second different switching frequencies during a second of the at least two frequency sweeps; and/or
- the cyclic sampling is performed for a number of periods of the first and second switching frequencies, respectively, corresponding to a sampling duration between 0.1 and 0.5 of the duration of a frequency sweep; and/or
- wherein the cyclic sampling of an amplitude of the beat signal comprises periods of the first and second switching frequencies divided into two sections:
∘ Cyclic sampling during the first of the at least two frequency passes using the first switching frequency and a further first switching frequency that is phase-shifted relative to the first switching frequency by one-quarter of the period; and
∘ Cyclic sampling during the second of the at least two frequency passes using the second switching frequency and a further second switching frequency that is phase-shifted by one-quarter of the period relative to the second switching frequency.

15. A method according to any one of claims 12 through 14, wherein the step of determining comprises:
- when dividing into two sections per period:
∘ calculating a difference between the stored values of the respective sections of the period of the first and second switching frequencies to generate a real or imaginary part of the Fourier component of the beat signal of the first and second switching frequencies;
- when dividing into four sections per period:
∘ Calculating a difference between the sums of the first and second segments and the third and fourth segments to generate a real part of the Fourier component of the beat signal of the first and second switching frequencies; and
∘ Calculating a difference between the sums of the first and fourth segments and the sums of the second and third segments to generate an imaginary part of the Fourier component of the beat signal of the first and second switching frequencies.

## Revendications

1. Dispositif de mesure optique destiné à détecter un objet (70) situé dans un espace détecté par le dispositif de mesure optique jusqu'à une distance maximale, comprenant :
- un dispositif laser (10) conçu pour émettre un faisceau laser à fréquence accordable, en particulier un faisceau laser monomode
- un séparateur de faisceau (13, 15, 50) conçu pour dériver une partie du faisceau laser émis par le dispositif laser en fonctionnement ;
- un dispositif optique conçu pour superposer la partie dérivée à une partie de la lumière réfléchie par l'objet (70) ;
- un dispositif de détection (20) agencé pour recevoir la lumière superposée et générer un signal en fonction de celle-ci ; **caractérisé par**
- un dispositif d'évaluation qui comporte au moins deux premiers accumulateurs de charge (82, 83, 84, 85) destinés à stocker une charge correspondant au signal, lesquels sont couplés de manière cyclique au dispositif de détection via un premier dispositif de commutation en réponse à des premiers signaux de commutation présentant au moins deux fréquences de commutation différentes ; qui comporte une unité de lecture conçue pour lire et calculer la différence entre les charges stockées dans les premiers accumulateurs de charge, respectivement après le couplage alterné avec un premier des au moins deux premiers signaux de commutation et après le couplage avec un deuxième des au moins deux premiers signaux de commutation.

2. Dispositif de mesure optique selon la revendication 1, dans lequel
- le dispositif de détection comporte deux détecteurs adjacents, dont l'un est couplé aux au moins deux premiers accumulateurs de charge et l'autre des deux détecteurs adjacents est couplé de manière cyclique, via un autre premier dispositif de commutation, à deux autres premiers accumulateurs de charge ; chaque signal de commutation destiné à ce premier dispositif de commutation supplémentaire étant déphasé d' , en particulier de λ/4, par rapport à chacun des au moins deux premiers signaux de commutation ; ou dans lequel
- le dispositif d'évaluation comporte deux autres premiers accumulateurs de charge couplés en alternance au dispositif de détection par l'intermédiaire du dispositif de commutation pour stocker le signal, de telle sorte que les quatre accumulateurs de charge soient connectés de manière cyclique au dispositif de détection à chaque période des premiers signaux de commutation.

3. Dispositif de mesure optique selon l'une des revendications précédentes, dans lequel
- le dispositif d'évaluation comporte au moins deux seconds accumulateurs de charge destinés à stocker une charge correspondant au signal, qui sont couplés de manière cyclique au dispositif de détection par l'intermédiaire d'un second dispositif de commutation en réponse à des seconds signaux de commutation présentant au moins deux fréquences de commutation différentes ; et
- l'unité de lecture est conçue pour lire et calculer la différence entre les charges stockées dans les seconds accumulateurs de charge, respectivement après le couplage alterné avec un premier des au moins deux seconds signaux de commutation et après le couplage avec un second des au moins deux seconds signaux de commutation.

4. Dispositif de mesure optique selon l'une des revendications précédentes, dans lequel le dispositif de détection est conçu sous la forme d'un réseau comportant une pluralité de détecteurs, chacun des détecteurs de cette pluralité étant couplé de manière cyclique, par l'intermédiaire d'un dispositif de commutation de l'unité d'évaluation, à au moins deux accumulateurs de charge de l'unité d'évaluation destinés à stocker une charge correspondant au signal, en réponse à des signaux de commutation présentant au moins deux fréquences de commutation différentes via le dispositif de commutation respectif

5. Dispositif de mesure optique selon la revendication 3 ou 4, dans lequel les fréquences de commutation des premiers signaux de commutation sont différentes des fréquences de commutation des seconds signaux de commutation.

6. Dispositif de mesure optique selon l'une des revendications précédentes, dans lequel les détecteurs du dispositif de détection sont conçus comme des détecteurs différentiels ; et/ou
le dispositif de détection comprend un amplificateur, en particulier un amplificateur à transimpédance à faible bruit, qui est disposé entre le dispositif de commutation et les détecteurs.

7. Dispositif de mesure optique selon l'une des revendications précédentes, dans lequel les fréquences de commutation des premiers et/ou des seconds signaux de commutation correspondent à une distance par rapport au dispositif de mesure optique qui résulterait d'un battement entre la partie dérivée et une lumière réfléchie par un objet à cette distance.

8. Dispositif de mesure optique selon l'une des revendications précédentes, dans lequel la durée de l'accord du faisceau laser émis par le dispositif laser est supérieure, en particulier du double ou plus, à une durée de mesure pendant laquelle l'un des premiers et/ou seconds signaux de commutation est présent.

9. Dispositif de mesure optique selon l'une des revendications précédentes, dans lequel deux fréquences de commutation adjacentes parmi les au moins deux premiers et/ou les au moins deux seconds signaux de commutation présentent respectivement des écarts équidistants.

10. Dispositif de mesure optique selon l'une des revendications précédentes, dans lequel
- le dispositif d'évaluation est conçu pour générer, pendant une durée de réglage du faisceau laser émis par le dispositif laser, au moins deux premiers et/ou deuxièmes signaux de commutation ; et/ou
- le dispositif d'évaluation est conçu pour déduire, à partir de la différence entre les charges stockées dans les premiers accumulateurs de charge, une valeur qui correspond à une composante de Fourier de la lumière superposée à la fréquence du signal de commutation.

11. Dispositif de mesure optique selon l'une des revendications précédentes, dans lequel le dispositif laser est conçu pour émettre un faisceau laser dont la fréquence est accordable
- , la fréquence du faisceau laser étant modifiée en fonction d'un courant traversant le dispositif laser
- comporte un laser à fréquence de sortie fixe, en aval duquel est disposé un modulateur optique.

12. Procédé de détermination d'une distance d'au moins un objet (70) par rapport à un point de référence, comprenant :
- la génération d'une lumière laser continue dont la fréquence est accordable au cours d'au moins deux balayages de fréquence, la fréquence de la lumière laser variant de manière continue, au cours de chaque balayage de fréquence, d'une première fréquence à une deuxième fréquence ;
- Dérivation d'une partie du faisceau laser
- Superposition de la partie dérivée du faisceau laser avec une partie du faisceau laser réfléchie par l'objet (70) afin de générer un signal de battement (FSI) ;
**caractérisé par**
- l'échantillonnage cyclique d'une amplitude du signal de battement à une première fréquence de commutation pendant un premier des au moins deux passages de fréquence et à une deuxième fréquence de commutation pendant un deuxième des au moins deux passages de fréquence,
chaque période des première et deuxième fréquences de commutation étant divisée en deux, notamment quatre, segments consécutifs de même durée, au cours desquels l'amplitude du signal de battement est échantillonnée et une valeur correspondante est générée, l'échantillonnage cyclique s'effectuant respectivement sur au moins deux périodes des première et deuxième fréquences de commutation ;
- détermination d'une composante de Fourier du signal de battement à la première fréquence de commutation à partir des valeurs mémorisées des segments de la période de la première fréquence de commutation, et d'une composante de Fourier du signal de battement à la deuxième fréquence de commutation à partir des valeurs mémorisées des segments de la période de la deuxième fréquence de commutation.

13. Procédé selon la revendication 12, dans lequel l'étape d'échantillonnage cyclique comprend :
- la détection, ou éventuellement la détection différentielle, de l'amplitude du signal de battement et sa conversion en un photocourant ;
- l'amplification facultative du photocourant ;
- le stockage d'une charge correspondant au photocourant pendant chaque segment ;
dans lequel, de manière facultative,
lors de segments identiques de périodes successives, les charges correspondant au courant photoélectrique sont regroupées.

14. Procédé selon l'une des revendications 12 à 13, dans lequel
- l'échantillonnage cyclique d'une amplitude du signal de battement s'effectue avec plusieurs premières fréquences de commutation différentes au cours d'un premier des au moins deux balayages de fréquence et avec plusieurs deuxièmes fréquences de commutation différentes au cours d'un deuxième des au moins deux balayages de fréquence ; et/ou
- l'échantillonnage cyclique s'effectue respectivement pour un nombre de périodes des premières et deuxièmes fréquences de commutation qui correspond à une durée d'échantillonnage comprise entre 0,1 et 0,5 de la durée d'un passage de fréquence ; et/ou
- dans lequel l'échantillonnage cyclique d'une amplitude du signal de battement comprend des périodes des premières et deuxièmes fréquences de commutation subdivisées en deux segments :
∘ un échantillonnage cyclique pendant le premier des au moins deux cycles de fréquence avec la première fréquence de commutation ainsi qu'une autre première fréquence de commutation déphasée par rapport à la première fréquence de commutation d'un quart de la période ; et
∘ un échantillonnage cyclique pendant le deuxième des au moins deux passages de fréquence avec la deuxième fréquence de commutation ainsi qu'une autre deuxième fréquence de commutation déphasée par rapport à la deuxième fréquence de commutation d'un quart de période.

15. Procédé selon l'une des revendications 12 à 14, dans lequel l'étape de détermination comprend :
- dans le cas d'une subdivision en deux segments par période :
∘ le calcul d'une différence entre les valeurs mémorisées des sections respectives de la période de la première et de la deuxième fréquence de commutation afin de générer une composante réelle ou imaginaire de la composante de Fourier du signal de battement de la première et de la deuxième fréquence de commutation ;
- dans le cas d'une subdivision en quatre segments par période :
∘ calculer une différence entre les sommes des première et deuxième sections ainsi que des troisième et quatrième sections afin de générer une partie réelle de la composante de Fourier du signal de battement des première et deuxième fréquences de commutation ; et
∘ calculer une différence entre les sommes des premier et quatrième segments ainsi que des deuxième et troisième segments afin de générer une partie imaginaire de la composante de Fourier du signal de battement des première et deuxième fréquences de commutation.
